(19) Europäisches Patentamt
European Patent Office
Office européen des brevets

(11) **EP 1 952 880 B1**

(12) **EUROPEAN PATENT SPECIFICATION**

(45) Date of publication and mention
of the grant of the patent:
**03.08.2016 Bulletin 2016/31**

(51) Int Cl.:
*B01J 13/04* (2006.01)          *B60C 7/12* (2006.01)
*B60C 17/06* (2006.01)          *C08F 220/06* (2006.01)
*C08F 220/42* (2006.01)          *C08J 3/12* (2006.01)
*C09K 3/00* (2006.01)

(21) Application number: **06822145.6**

(22) Date of filing: **24.10.2006**

(86) International application number:
**PCT/JP2006/321165**

(87) International publication number:
**WO 2007/049616 (03.05.2007 Gazette 2007/18)**

(54) **THERMAL EXPANSION MICROSPHERES AND PROCESS FOR PRODUCING THEM**

THERMISCH EXPANDIERENDE MIKROKUGELN UND HERSTELLUNGSVERFAHREN DAFÜR

MICROSPHERES A EXPANSION THERMIQUE ET LEUR PROCEDE DE PRODUCTION

(84) Designated Contracting States:
**DE ES FR GB IT SE**

(30) Priority: **27.10.2005 JP 2005313397**

(43) Date of publication of application:
**06.08.2008 Bulletin 2008/32**

(73) Proprietors:
• **Bridgestone Corporation**
**Tokyo 104-8340 (JP)**
Designated Contracting States:
**DE ES FR IT**
• **Matsumoto Yushi-Seiyaku Co., Ltd.**
**Yao-shi**
**Osaka 581-0075 (JP)**

(72) Inventors:
• **TERATANI, Hiroyuki**
**Kodaira-shi, Tokyo 1878531 (JP)**
• **MASUDA, Toshiaki**
**Yao-shi, Osaka 5810075 (JP)**

• **KITANO, Kenichi**
**Yao-shi, Osaka 5810075 (JP)**
• **MIKI, Katsushi**
**Yao-shi, Osaka 5810075 (JP)**
• **AOKI, Takayuki**
**Yao-shi, Osaka 5810075 (JP)**
• **INOHARA, Takeshi**
**Yao-shi, Osaka 5810075 (JP)**

(74) Representative: **Oxley, Robin John George et al**
**Marks & Clerk LLP**
**90 Long Acre**
**London WC2E 9RA (GB)**

(56) References cited:
EP-A1- 1 508 604          WO-A1-2004/074396
WO-A1-2005/049698        JP-A- 2004 255 981
US-A1- 2005 080 151

Remarks:
The file contains technical information submitted after
the application was filed and not included in this
specification

**Description**

TECHNICAL FIELD

This invention relates to microspheres made of a heat-expandable resin, hollow fine particles obtained by heat-expanding these microspheres and a method for producing the same, and further to a tire/rim assembly capable of continuously and safely running over a required distance even at a punctured state due to external injury or the like of a tire after the hollow fine particles are applied to the tire and having excellent durability, ride comfort and the like during steady running before the injury.

RELATED ART

In general, the heat-expandable microsphere having a structure that a foaming agent is sealed in an interior of an outer shell made of a thermoplastic resin is also called a heat-expandable microcapsule. As the thermoplastic resin constituting the outer shell of the heat-expandable microsphere are a vinylidene chloride copolymer, an acrylonitrile copolymer, an acrylic copolymer and so on, and as the foaming agent is mainly used a hydrocarbon such as isobutane, isopentane or the like (see Patent Document 1).

Furthermore, lightweight hollow fine particles (heat-expanded microspheres) are obtained by heat-expanding the heat-expandable microspheres. The hollow fine particles are utilized in various applications for the purpose of reducing weights of various products.

For example, Patent Document 2 discloses that hollow fine particles obtained by heat-expanding heat-expandable microspheres including a specific fluorine-containing compound are filled in a tire compartment defined by a tire and a rim to serve as an excellent injury sealing member and tire internal pressure applying member at the time of tire injury. Although the hollow fine particles applied to the tire have already given good properties in the steady running zone, it is desired to further improve the durability corresponding to a high-speed running zone associated with the speeding up of recent vehicles.

Patent Document 1: U.S. Patent No. 3615972 specification
Patent Document 2: WO 2005/01694 brochure

Reference is also made to WO 2005/049698, EP-A-1508604 and US 2005/008151

DISCLOSURE OF THE INVENTION

PROBLEMS TO BE SOLVED BY THE INVENTION

It is, therefore, an object of the invention to provide heat-expandable microspheres as a starting material for hollow fine particles having excellent performances required for giving not only durability in steady running zone but also durability in high-speed running zone to a tire/rim assembly , as well as a method for producing the same.

MEANS FOR SOLVING PROBLEMS

The inventors have made various studies for solving the above problems and found the following two discoveries and as a result the invention has been accomplished.

(i) The heat-expandable microspheres produced by polymerizing in the presence of a particular polymerization initiator are further processed to obtain hollow fine particles capable of giving a steady running durability and a high-speed running durability to the tire.

(ii) The heat-expandable microspheres of the item (i) capable of giving the high-speed running durability to the tire satisfy a compression recovering ratio of a particular range as measured after hollow fine particles obtained by heat-expansion of the microspheres are subjected to a specific treatment of increasing internal pressure.

That is, the summary of the invention is as follows.

(1) Heat-expandable microspheres each consisting of an outer shell made of a thermoplastic resin obtained by polymerizing a monomer component in the presence of a polymerization initiator, and a foaming agent encapsulated in the outer shell and having a boiling point not higher than a softening point of the thermoplastic resin, wherein the monomer component comprises a nitrile monomer and carboxyl group-containing monomer as an essential component and the foaming agent comprises a fluorine-containing compound having an ether structure and a carbon number of 2-10 and containing no chlorine atom and bromine atom, and

a compression recovering ratio is not less than 82% after hollow fine particles obtained by heat-expanding the heat-expandable microspheres are subjected to a treatment of increasing an internal pressure; according to the method as described in paragraphs [0048] and [0049] of the description.

(2) Heat-expandable microspheres according to item (1), wherein the nitrile monomer is not less than 30 mass% but not more than 75 mass% of the monomer component and the carboxyl group-containing monomer is not less than 25 mass% but not more than 70 mass% of the monomer component.

Preferably, the foaming agent has a boiling point of not lower than 20°C but not higher than 80°C and an encapsulation ratio thereof is not less than 10 mass% but not more than 60 mass%.

(3) Heat-expandable microspheres according to item (1) or (2), wherein the microspheres have an average particle size of not less than 5 $\mu$m but not more than 50 $\mu$m, a coefficient of variation in particle size distribution CV of not more than 30% and an expansion starting temperature of not lower than 120°C but not higher than 210°C.

(4) Heat-expandable microspheres according to any one of items (1)-(3), wherein the outer shell has particles of a metal soap and/or carbon black at its outer peripheral face.

(5) A method for producing heat-expandable microspheres by steps of dispersing an oily mixture of a monomer component, a foaming agent and a polymerization initiator into an aqueous dispersion medium and polymerizing the monomer component included in the oily mixture, wherein

as the foaming agent is used a foaming agent comprising a fluorine-containing compound having an ether structure and a carbon number of 2-10 and containing no chlorine atom and bromine atom, and

as the polymerization initiator is used a polymerization initiator comprising a peroxydicarbonate as an essential component, wherein the monomer component comprises a nitrile monomer and a carboxyl group-containing monomer as an essential component and the peroxydicarbonate is at least one selected from bis(4-t-butylcyclohexyl) peroxydicarbonate, di-2-ethoxyethyl peroxydicarbonate and di-sec-butyl peroxydicarbonate, and

a compression recovering ratio is not less than 82% after hollow fine particles obtained by heat-expanding the heat-expandable microspheres are subjected to a treatment of increasing an internal pressure according to the method as described in paragraphs [0048] and [0049] of the description.

(6) A method for producing heat-expandable microspheres according to item (5), wherein an amount of the polymerization initiator is not less than 0.2 part by mass but not more than 8.0 parts by mass per 100 parts by mass of the monomer component.

Preferably, the monomer component further contains a crosslinking agent.

Preferably, an amount of the crosslinking agent is not less than 0.1 part by mass but not more than 5 parts by mass per 100 parts by mass of the monomer component.

(7) A method for producing heat-expandable microspheres according to item (5), wherein the nitrile monomer is not less than 30 mass% but not more than 75 mass% of the monomer component and the carboxyl group-containing monomer is not less than 25 mass% but not more than 70 mass% of the monomer component.

(8) A method for producing heat-expandable microspheres according to any one of items (5)-(7), which further comprises a step of attaching a metal soap and/or carbon black to outer peripheral faces of the heat-expandable microspheres.

At this moment, the compression recovering ratio of the hollow fine particles can be measured according to the following procedure.

About 500 cm$^3$ of hollow fine particles are first filled in a transparent, cylindrical pressure vessel of an acrylic resin having a volume of about 1000 cm$^3$ and a constant inner diameter, and then the vessel is closed and pressurized up to 0.2 MPa (gauge pressure) inside the vessel with nitrogen to reduce the volume of the hollow fine particles. Thereafter, the cylindrical pressure vessel of the acrylic resin containing the hollow fine particles is placed in a geared oven set to a temperature of 50°C and subjected to a heat treatment to recover the volume of the hollow fine particles. The treatment of increasing the internal pressure of the hollow fine particles is completed at a time of saturating the increase of the height of the hollow fine particles in the vessel.

2.00 mg of the hollow fine particles after the treatment of increasing the internal pressure are charged into an aluminum cup having a diameter of 6 mm (inner diameter: 5.65 mm) and a depth of 4.8 mm, and an aluminum cover having a diameter of 5.6 mm and a thickness of 0.1 mm is placed on an upper part of the hollow fine particle layer to prepare a specimen. Then, a height $L_1$ of the hollow fine particle layer at a state of applying a force of 2.5 N to the specimen through a penetrator under an environment of 25°C is measured by using DMA (DMAQ 800 model, made by TA Instrument). Thereafter, an operation that the hollow fine particle layer is pressurized from 2.5 N to 18 N at a rate of 10 N/min and depressurized from 18 N to 2.5 N at a rate of 10 N/min is repeated 8 times, and then a height $L_2$ of the hollow fine particle layer at a state of applying a force of 2.5 N to the upper part of the aluminum cover with the penetrator is measured. Then, a ratio between the measured heights $L_1$ and $L_2$ of the hollow fine particle layer as shown in the following equation is defined as a compression recovering ratio.

$$\text{Compression recovering ratio (\%)} = (L_2/L_1) \times 100$$

Moreover, the pressure of the tire compartment described herein means a gauge pressure (pressure shown by a gauge) otherwise specified.

In the heat-expandable microspheres according to the invention, it is important that the compression recovering ratio after the hollow fine particles obtained by heat-expanding the microspheres are subjected to the treatment of increasing the internal pressure is high. Because, the hollow fine particles made from the heat-expandable microspheres can develop a good durability at such a state under "repetitive varying input of centrifugal force" that they are subjected to the centrifugal force at a non-contacting zone in the tire-rim assembly rotating under loading and the centrifugal force is dropped out at the moment of entering into a ground-contacting zone. That is, the hollow fine particles are always subjected to the varying input of centrifugal force in the rotating tire. Thus, compression and recovery are repeatedly input to the particles by adding the varying input of centrifugal force. If the recovering property is low in the compression, the particles are subjected to further input at a state of crushing by the compression, and as a result, it has been confirmed that the hollow fine particles bring about the breakage from a local bending deformation part around the crushed portion at their outer shells. Therefore, when the aforementioned compression recovering ratio is maintained at a higher level, the local bending deformation of the outer shell in the hollow fine particles can be avoided to hold the durability in the tire compartment during the running.

Thus, when the hollow fine particles are filled in the interior of the tire/rim assembly after the treatment of increasing the internal pressure, excellent steady running durability and high-speed running durability are obtained.

EFFECT OF THE INVENTION

According to the invention, the hollow fine particles considerably improving the durability can be provided by using the polymerization initiator comprising the peroxydicarbonate as an essential component in the production method for heat-expandable microspheres as a starting material for the hollow fine particles.

Therefore, by applying the hollow fine particles to the tire/rim assembly can be provided a tire-rim assembly developing a performance capable of stably running over a required distance even in the pressure dropping of the tire compartment after the tire injury and surely holding the above performance even under a wider running condition of from low speed to high speed in the steady running.

Also, the function inherent to the hollow fine particles is maintained over a period of time of causing the tire injury, so that the high performance of the tire/rim assembly can be guaranteed over a long time of period.

BRIEF DESCRIPTION OF THE DRAWINGS

FIG. 1 is a schematic view of a heat-expanding step in an apparatus for producing hollow fine particles.
FIG. 2 is a widthwise section view illustrating a tire/rim assembly aiming at the invention.
FIG. 3 is an enlarged section view illustrating a supply-drainage valve.

DESCRIPTION OF REFERENCE SYMBOLS

1 hot air nozzle
2 refrigerant stream
3 overheat-preventing cylinder
4 dispersion nozzle
5 impinging plate
6 gas fluid containing heat-expandable microspheres
7 inert gas stream
8 hot air stream
10 tire
11 rim

12 tire compartment
13 hollow particles
14 bead core
15 carcass
16 belt
17 tread
18 supply-drainage valve
19 innerliner layer
20 space
21 valve fixing port
22 filter

BEST MODE FOR CARRYING OUT THE INVENTION

Next, the invention will be described in detail.

At first, each of the heat-expandable microspheres according to the invention consists of an outer shell made of a thermoplastic resin obtained by polymerizing a monomer component in the presence of a polymerization initiator, and a foaming agent encapsulated in the outer shell and having a boiling point not higher than a softening point of the thermoplastic resin, and is important that the foaming agent comprises a fluorine-containing compound having an ether structure and a carbon number of 2-10 and containing no chlorine atom and bromine atom, and the polymerization initiator particularly comprises a peroxydicarbonate as an essential component.

Now, the explanation will be continued based on the production method for heat-expandable microspheres.

The production method for heat-expandable microspheres according to the invention comprises a step of dispersing an oily mixture of a monomer component, a foaming agent and a polymerization initiator into an aqueous dispersion medium to polymerize the monomer component included in the oily mixture.

At this moment, the monomer component may further contain a crosslinking agent. Also, the foaming agent comprises a fluorine-containing compound having an ether structure and a carbon number of 2-10 and containing no chlorine atom and bromine atom, and the polymerization initiator comprises a peroxydicarbonate as an essential component.

There are described the foaming agent, monomer component and polymerization initiator as a main component of the heat-expandable microspheres below.

[Foaming agent]

It is important that the foaming agent comprises a fluorine-containing compound having a boiling point not higher than a softening point of a thermoplastic resin constituting the outer shell of the heat-expandable microsphere and an ether structure and containing no chlorine atom and bromine atom and having a carbon number of 2-10.

The fluorine-containing compound is a component capable of giving flame retardant properties to the heat-expandable microspheres. In the heat-expandable microspheres including the fluorine-containing compound, there are characteristics that the change of encapsulation ratio of the foaming agent before and after the expansion is small and the leakage of the foaming agent toward the outside of the outer shell at the expansion step is suppressed.

As the fluorine-containing compound may be mentioned hydroflurorethers such as $C_3H_2F_7OCF_2H$ $C_3HF_6OCH_3$, $C_2HF_4OC_2H_2F_3$, $C_2H_2F_3OC_2H_2F_3$, $C_4HF_8OCH_3$, $C_3H_2F_5OC_2H_3F_2$, $C_3HF_6OC_2H_2F_3$, $C_3H_3F_4OCHF_2$, $C_3HF_6OC_3H_2F_5$, $C_4H_3F_6OCHF_2$, $C_3H_3F_4OC_2HF_4$, $C_3HF_6OC_3H_3F_4$, $C_3F_7OCH_3$, $C_4F_9OCH_3$, $C_4F_9OC_2H_5$, $C_7F_{15}OC_2H_5$ and so on. They may be used alone or in a combination of two or more.

The heat-expandable microspheres encapsulating the foaming agent comprising $C_3F_7OCH_3$ (methylperfluoropropyl ether, boiling point: 34°C), $C_4F_9OCH_3$ (methylperfluorobutyl ether, boiling point: 61°C), $C_4F_9OC_2H_5$ (ethylperfluorobutyl ether, boiling point: 76°C) or the like among the above hydrofluoroethers are high in the compression recovering ratio when the hollow fine particles obtained by heat-expanding the heat-expandable microspheres are further subjected to a treatment of increasing internal pressure. When the hollow fine particles are filled into an interior of a tire/rim assembly after the treatment of increasing the internal pressure, excellent steady running durability and high-speed running durability are obtained.

The mass ratio of the fluorine-containing compound in the foaming agent is preferably not less than 50 mass% of the whole of the foaming agent, further preferably not less than 80 mass%, more preferably not less than 95 mass%, most preferably not less than 98 mass%. As the mass ratio of the fluorine-containing compound in the foaming agent becomes higher, the properties of the fluorine-containing compound are reflected in the heat-expandable microspheres, and hence the properties such as flame retardant properties, incombustibility and the like can be given to the heat-expandable microspheres.

The boiling point of the foaming agent is sufficient to be not higher than the softening point of the thermoplastic resin constituting the outer shell of the heat-expandable microsphere, but it is preferably 20-80°C, further preferably 25-70°C, most preferably 30-60°C. When the boiling point of the foaming agent is within the above range, the excellent steady running durability and high-speed running durability are obtained.

The amount of the foaming agent to the monomer component mentioned later is not particularly limited, but the foaming agent is preferably added in an amount of 10-60 parts by mass, further preferably 15-55 parts by mass, more preferably 20-50 parts by mass, most preferably 25-45 parts by mass per 100 parts by mass of the monomer component from a viewpoint of properly controlling the amount of the foaming agent encapsulated in the heat-expandable microspheres and the true specific gravity of the hollow fine particles obtained by heat-expanding the heat-expandable microspheres.

When the amount of the foaming agent to the monomer component is within the above range, there can be enhanced the compression recovering ratio after the hollow fine particles obtained by heat-expanding the heat-expandable microspheres are further subjected to the treatment of increasing the internal pressure. Furthermore, when the hollow fine particles after the treatment of increasing the internal pressure are filled into the interior of the tire-rim assembly, the excellent high-speed running durability is obtained. That is, if the amount of the foaming agent is less than 10 parts by mass, when the hollow fine particles obtained by heat-expanding the heat-expandable microspheres are filled into a space portion of the tire-rim assembly, the function of giving the tire internal pressure sufficient to safely conduct the running in the tire injury can not be developed and the steady running durability may be deteriorated. While, if the amount of the foaming agent exceeds 60 parts by mass, the thickness of the hollow fine particles obtained by the heat-expansion becomes very thin and hence the stability with the lapse of time may be lacking due to the occurrence of blow-out of the foaming agent and the like.

[Monomer component]

The thermoplastic resin forming the outer shells of the heat-expandable microspheres is obtained by polymerizing the monomer component in the presence of a polymerizable initiator.

The monomer component is a (radically) polymerizable monomer and comprises,

nitrile monomers such as acrylonitrile, methacrylonitrile, $\alpha$-chloroacrylonitrile, $\alpha$-ethoxyacrylonitrile, fumaronitrile and the like; and

carboxyl group-containing monomers such as acrylic acid, methacrylic acid, itaconic acid, maleic acid, fumaric acid, citraconic acid and the like. These may be used in combination with one or more of the following:

halogenated vinyl monomers such as vinyl chloride, vinylidene chloride, vinyl bromide, vinyl fluoride and the like;
vinylester monomers such as vinyl acetate, vinyl propionic acid, vinyl butyrate and the like;
(meth)acrylate monomers such as (meth)acrylate, ethyl (meth)acrylate, n-butyl (meth)acrylate, isobutyl (meth)acrylate, t-butyl (meth)acrylate, propyl (meth)acrylate, n-octyl (meth)acrylate, dodecyl (meth)acrylate, 2-ethylhexyl (meth)acrylate, stearyl (meth)acrylate, 2-chloroethyl (meth)acrylate, phenyl (meth)acrylate, isobornyl (meth)acrylate, cyclohexyl (meth)acrylate, benzyl (meth)acrylate, $\beta$-carboxyethyl acrylate, 2-hydroxyethyl (meth)acrylate, 2-hydroxypropyl (meth)acrylate and the like;
styrene monomers such as styrene, o-methylstyrene, m-methylstyrene, p-methylstyrene, p-ethylstyrene, 2,4-dimethylstyrene, p-n-butylstyrene, p-tert-butylstyrene, p-n-hexylstyrene, p-n-octylstyrene, p-n-nonylstyrene, p-n-decylstyrene-, p-n-dodecylstyrene, n-methoxystyrene, p-phenylstyrene, p-chlorostyrene, 3,4-dichlorostyrene and the like;
acrylamide monomers such as (meth)acrylamide, substituted (meth)acrylamides and the like;
maleimide monomers such as N-phenyl maleimide, N-(2-chlorophenyl) mnaleimide, N-cyclohexylmaleimide, N-laurylmaleimide and the like;
ethylenically unsaturated monoolefinic monomers such as ethylene, propylene, butylene, isobutylene and the like;
vinyl ether monomers such as vinyl methyl ether, vinyl ethyl ether, vinyl isobutyl ether and the like;
vinyl ketone monomers such as vinyl methylketone, vinyl hexylketone, methyl isopropenyl ketone and the like;
N-vinyl monomers such as N-vinylpyrrole, N-vinylcarbazole, N-vinylindole, N-vinylpyrrolidone and the like;
vinylnaphthalate and so on.

Moreover, carboxyl group in a part or a whole of the carboxyl group-containing monomers may be neutralized in the polymerization. Further, (meth)acryl means acryl or methacryl.

The monomer component includes the carboxyl group-containing monomer as an essential component, and it is preferable that a monomer reacting with carboxyl group in the carboxyl group-containing monomer such as N-methylol (meth)acrylamide, N,N-dimethylaminoethyl (meth)acrylate, N,N-dimethylaminopropyl (meth)acrylate, magnesium mono(meth)acrylate, zinc mono(meth)acrylate, vinylglycidyl ether, propenylglycidyl ether, glycidyl (meth)acrylate, 2-hydroxyethyl (meth)acrylate, 2-hydroxypropyl (meth)acrylate, 2-hydroxybutyl (meth)acrylate, 2-hydroxy-3-phenoxypropyl (meth)acrylate or the like is not substantially included as a monomer other than the carboxyl group-containing monomer to be included in the monomer component. That is, a mass ratio of the monomer reacting with carboxyl group in the carboxyl group-containing monomer is preferably not more than 5 mass%, further preferably not more than 3 mass%, more preferably not more than 1 mass%, and most preferably 0 mass% based on the monomer component.

The monomer component includes the carboxyl group-containing monomer together with the nitrile monomer as an essential component because the expansion starting temperature of the heat-expandable microspheres and hollow fine particles (hereinafter expansion starting temperature of heat-expandable microspheres is referred to as Ts1 and expansion starting temperature of hollow fine particles is referred to as Ts2) can be raised together with the heat resistance as regards the resulting heat-expandable microspheres, hollow fine particles and those subjected to the treatment of increasing the internal pressure.

Further, the monomer component may contain components other than the nitrile monomer and the carboxyl group-containing monomer. In this case, a mass ratio of the nitrile monomer is preferably 30-75 mass%, further preferably 32-72 mass%, more preferably 35-70 mass%, most preferably 40-65 mass% based on the monomer component. Similarly, a mass ratio of the carboxyl group-containing monomer is preferably 25-70 mass%, further preferably 28-68 mass%, more preferably 30-65 mass%, most preferably 35-60 mass% based on the monomer component.

When the mass ratios of the nitrile monomer and the carboxyl group-containing monomer satisfy the above ranges, the expansion starting temperature Ts1 of the resulting heat-expandable microspheres can be controlled to a preferable range of 120-210°C. It is recommended that the expansion starting temperature Ts1 is controlled to further preferably 130-205°C, more preferably 140-200°C, most preferably 145-195°C.

When the mass ratios of the nitrile monomer and the carboxyl group-containing monomer satisfy the above ranges, the expansion starting temperature Ts2 of the hollow fine particles mentioned later can be controlled to a preferable range of 120-200°C. It is recommended that the expansion starting temperature Ts2 is controlled to further preferably 130-195°C, more preferably 140-190°C, most preferably 150-185°C.

Further, when the mass ratios of the nitrile monomer and the carboxyl group-containing monomer satisfy the above ranges, the compression recovering ratio becomes higher after the hollow fine particles obtained by heat-expanding the resulting heat-expandable microspheres are further subjected to the treatment of increasing the internal pressure. Therefore, when the hollow fine particles subjected to the treatment of increasing the internal pressure are filled in the interior of the tire-rim assembly, the excellent steady running durability and high-speed running durability are obtained.

Moreover, the monomer component may include a crosslinking agent, which is a polymeric monomer having two or more polymeric double bonds, in addition to the above components.

The crosslinking agent is not particularly limited, but may include, for example,
aromatic divinyl compounds such as divinyl benzene, divinyl naphthalene and the like;
di(meth)acrylate compounds such as allyl methacrylate, triacryl formal, triallyl isocysanate, ethylene glycol di(meth)acrylate, diethylene glycol di(meth)acrylate, triethylene glycol di(meth)acrylate, 1,4-butanediol di(meth)acrylate, 1,9-nonanediol di(meth)acrylate, 1,10-decanediol di(meth)acrylate, PEG#200 di(meth)acrylate, PEG#400 di(meth)acrylate, PEG#600 di(meth)acrylate, neopentyl glycol di(meth)acrylate, 1,4-butanediol dimethacrylate, 1,6-hexane diol di(meth)acrylate, 1,9-nonane diol di(meth)acrylate, trimethylolpropane trimethacrylate, glycerine dimethacrylate, dimethylol-tricyclodecane diacrylate, pentaerythritol tri(meth)acrylate, pentaerythritol tetraacrylate, dipentaerythritol hexaacrylate, neopentylglycol acrylate benzoate, trimethylolpropane acrylate benzoate, 2-hydroxy-3-acryloyloxypropyl methacrylate, hydroxypivaric acid neopentyl glycol diacrylate, ditrimethylolpropane tetraacrylate, 2-butyl-2-ethyl-1,3-propanediol diacrylate and the like. These crosslinking agents may be used alone or in a combination of two or more.

The amount of the crosslinking agent is not particularly limited, but is preferably 0.01-5 parts by mass, further preferably 0.05-3 parts by mass, more preferably 0.1-2.5 parts by mass, most preferably 0.3-2.0 parts by mass based on 100 parts by mass of the monomer component considering the degree of the crosslinking, retention ratio of the foaming agent encapsulated in the outer shell, heat resistance and heat-expandability.

When the amount of the crosslinking agent satisfies the above range, the compression recovering ratio of the hollow fine particles obtained by heat-expanding the resulting heat-expandable microspheres becomes higher after being further subjected to the treatment of increasing the internal pressure. Therefore, when the hollow fine particles subjected to the treatment of increasing the internal pressure are filled in the interior of the tire-rim assembly, the excellent steady running durability and high-speed running durability are obtained.

[Polymerization initiator]

In the invention, the outer shells of the heat-expandable microspheres are made of a thermoplastic resin obtained by polymerizing the monomer component in the presence of a particular polymerization initiator. The polymerization initiator is important to include a peroxydicarbonate. By using such a peroxydicarbonate, the compression recovering ratio of the hollow fine particles obtained by heat-expanding the resulting heat-expandable microspheres of not less than 75% is satisfied after being further subjected to the treatment of increasing the internal pressure. Therefore, when the hollow fine particles subjected to the treatment of increasing the internal pressure are filled in the interior of the tire-rim assembly, the excellent steady running durability and high-speed running durability are obtained.

The peroxydicarbonate is at least one selected from bis(4-t-butylcyclohexyl) peroxydicarbonate, di-2-ethoxyethyl peroxydicarbonate and di-sec-butyl peroxydicarbonate.

Considering the effects such as the easy availability of the peroxydicarbonate and (co)polymerizability of the monomer component and randomization of the thermoplastic resin structure constituting the outer shell, at least one selected frombis(4-t-butylcyclohexyl) peroxydicarbonate and di-sec-butyl peroxydicarbonate is further preferable.

The polymerization initiator may contain a polymerization initiator other than the peroxydicarbonate. As the other polymerization initiator, mention may be made of, for example, peroxides such as t-butylperoxy isobutyrate, t-butylperoxy-2-ethyl hexanoate, t-hexylperoxy-2-ethyl hexanoate, 2,5-dimethyl-2,5-bis(2-ethylhexanoylperoxy) hexane, 1,1,3,3-tetramethylbutylperoxy-2-ethyl hexanoate, t-butylperoxy pivarate, t-hexylperoxy pivarate, t-butylperoxy neodecanoate, t-hexylperoxy neodecanoate, 1-cyclohexyl-1-methylethylperoxy neodecanopate, 1,1,3,3-tetramethylbutylperoxy neodecanoate, cumylperoxy neodecanoate, t-butylperoxy-3,5,5-trimethyl hexanoate, octanoyl peroxide, lauroyl peroxide, stearyl peroxide, succinic acid peroxide, benzoyl peroxide and the like;

azo compounds such as 2,2'-azobis(4-methoxy-2,4-dimethylvaleronitrile), 2,2'-azobisisobutyronitrile, 2,2'-azobis(2,4-dimethylvaleronitrile), 2,2'-azobis(2-methylpropionate), 2,2'-azobis(2-methylbutyronitrile), and the like; and so on. As these polymerization initiators, it is preferable to be an oil-soluble polymerization initiator soluble in the radical polymeric monomer.

The amount of the polymerization initiator is not particularly limited, but is preferably 0.3-8.0 parts by mass, further preferably 0.5-7.5 parts by mass, most preferably 0.8-7.0 parts by mass based on 100 parts by mass of the monomer component.

That is, when the amount of the polymerization initiator satisfies the above range, the compression recovering ratio of the hollow fine particles obtained by heat-expanding the resulting heat-expandable microspheres becomes further higher after being further subjected to the treatment of increasing the internal pressure. Therefore, when the hollow fine particles subjected to the treatment of increasing the internal pressure are filled in the interior of the tire-rim assembly, the more excellent steady running durability and high-speed running durability are obtained.

When the polymerization initiator contains the other initiator together with the peroxydicarbonate, as the ratio of the peroxydicarbonate occupied in the polymerization initiator is large, the effect becomes higher. At this moment, the ratio of the peroxydicarbonate occupied in the polymerization initiator is preferably not less than 20 mass%, further preferably not less than 40 mass%, more preferably not less than 60 mass%, most preferably not less than 80 mass%.

[Production steps of heat-expandable microspheres]

The heat-expandable microspheres are produced by a suspension polymerization. At first, an oily mixture including a monomer component, a foaming agent and a polymerization initiator is dispersed into an aqueous dispersing medium to prepare an aqueous suspension. Then, the monomer component included in the oily mixture is polymerized.

In this production method, it is preferable to conduct the suspension polymerization in an aqueous suspension containing a proper dispersing stabilizer or the like.

As the dispersing stabilizer in the aqueous system are mentioned, for example, colloidal silica, colloidal calcium carbonate, magnesium hydroxide, calcium phosphate, aluminum hydroxide, ferric hydroxide, calcium sulfate, sodium sulfate, calcium nitrate, calcium carbonate, barium carbonate, magnesium carbonate, alumina sol and the like. It is preferable that the dispersing stabilizer is used in an amount of 0.1-20 mass% based on the monomer component.

Besides, as a dispersion stabilizing auxiliary may be used various emulsifiers, for example, a high molecular weight type dispersion stabilizing auxiliary such as condensed product of diethanolamine and aliphatic dicarboxylic acid, gelatin, polyvinylpyrrolidone, methylcellulose, polyethylene oxide, polyvinyl alcohol or the like; a cationic surfactant such as alkyltrimethylammonium chloride, dialkyldimethylammonium chloride or the like; an anionic surfactant such as sodium alkyl sulfate or the like; an amphoteric surfactant such as betain alkyldimethylamino acetate, betain alkyldihydroxyethylamino acetate or the like; and so on. The dispersion stabilizing auxiliary is preferable to be used in an amount of 0.05-2 parts by mass based on 100 parts by mass of the monomer component.

The aqueous suspension containing the dispersing stabilizer is prepared by compounding the dispersing stabilizer, dispersion stabilizing auxiliary and the like into water (e.g. deionized water). In the polymerization, pH of the aqueous suspension is properly determined in accordance with the kind of the dispersing stabilizer and dispersion stabilizing auxiliary used. Also, a water-soluble reducing agent may be added to the aqueous suspension, whereby there are suppressed the formation of aggregated fine spheres during the polymerization. As the water-soluble reducing agent are mentioned an alkali metal salt of nitrous acid such as sodium nitrite or potassium nitrite; stannous chloride, tin chloride, ferrous chloride, ferric chloride, ferrous sulfate, water-soluble ascorbic acids and the like. Among them, the alkali metal salt of nitrous acid is preferable in view of the stability in water. The addition amount is preferably 0.0001-1 part by mass, further preferably 0.0003-0.1 part by mass based on 100 parts by mass of the monomer component.

As a method for emulsion-dispersing the oily mixture into the aqueous dispersing medium at a given particle size, use may be made of, for example, a method of agitating through a homomixer (made by Tokushu Kika Kogyo Kabushiki Kaisha), a homodisper (made by Tokushu Kika Kogyo Kabushiki Kaisha) or the like, a method using, for example, a static type dispersing apparatus such as a static mixer (made by Noritake Engineering Company Ltd), a film emulsifying method., and a general dispersing method such as ultrasonic dispersing method or the like.

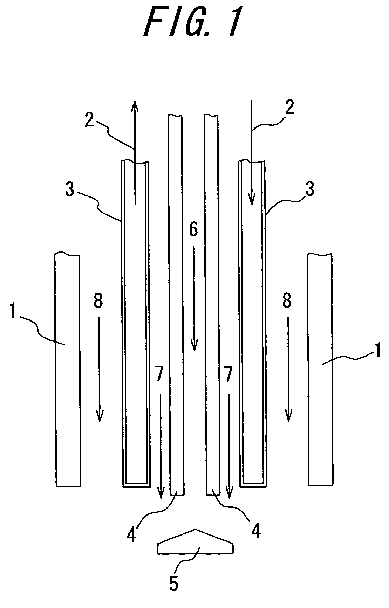

As a method for emulsion-dispersing the oily mixture, there is also a method using a continuous high-speed rotating shear type agitation dispersing machine as disclosed in JP-A-2000-191817. However, it is preferable to use a method wherein hydrophobic substances and aqueous medium are fed into a homogenizer provided with a conical or circular frustum-like screen having fluid holes of vertical type slit and a conical or circular frustum-like rotor disposed at a clearance in an inside thereof and having blade knifes at the side of the rotor and passed through the clearance between the rotor and the screen and through the fluid holes by rotating the rotor at a high speed to emulsion-disperse the oily mixture into the aqueous dispersing medium, i.e. a method using a clearmix (see paragraphs [0005]-[0013] and FIGS. 1-4 of JP-A-2004-959).

The polymerization temperature may be freely set in accordance with the kind of the polymerization initiator, but is adjusted to a range of, preferably 40-100°C, further preferably 45-90°C, more preferably 50-85°C. The polymerization initial pressure is 0-5.0 MPa, further preferably 0.1-3.0 MPa, more preferably 0.2-2.0 MPa as a gauge pressure.

In the production of the heat-expandable microspheres, a step of adhering a coating agent to outer surfaces of the resulting microspheres may be further included. At this adhesion step, the coating agent can be adhered to outer peripheral faces of outer shells of the heat-expandable microspheres. By adhering the coating agent is improved the dispersibility in the use to improve the fluidity of the heat-expandable microspheres.

The coating agent may be organic or inorganic ones and may use one or more of the followings.

That is, as the organic coating agent are mentioned, for example, a metal soap such as magnesium stearate, calcium stearate, zinc stearate, barium stearate, lithium stearate or the like; a synthetic wax such as polyethylene wax, lauramide, myristylamide, palmitylamide, stearamide, hardened castor oil or the like; resinous powder of polyacrylamide, polyimide, nylon, methyl polymethacrylate, polyethylene, polytetrafluoroethylene or the like; and so on.

As the inorganic coating agent are mentioned ones having a laminar structure such as talc, mica, bentonite, cerisite, carbon black, molybdenum disulfide, tungsten disulfide, fluorinated graphite, calcium fluoride, boron nitride and the like; and silica, alumina, mica, calcium carbonate, calcium hydroxide, calcium phosphate, magnesium hydroxide, magnesium phosphate, barium sulfate, titanium dioxide, zinc oxide, ceramic beads, glass beads, quartz beads and so on.

Among these coating agents, the metal soap particles and/or carbon black are preferable. Therefore, when the hollow fine particles obtained by heat-expanding the resulting heat-expandable microspheres and subjected to the treatment of increasing the internal pressure are filled in the interior of the tire-rim assembly, the heat fusion between the particles is prevented and the excellent high-speed running durability is obtained.

The average particle size of the coating agent is preferable to be not more than 1/10 of the average particle size of the heat-expandable microspheres before the adhesion. Here, the average particle size means an average particle size of primary particles.

The amount of the fine particle coating agent adhered is not particularly limited, but is preferably 0.1-50 parts by mass, further preferably 0.5-40 parts by mass, more preferably 1-30 parts by mass, most preferably 5-20 parts by mass based on 100 parts by mass of the heat-expandable microspheres before adhesion considering the feature that the function of the fine particle coating agent can be developed sufficiently, the magnification of true specific gravity of the resulting heat-expandable microspheres and the like.

The adhesion of the coating agent can be conducted by mixing the heat-expandable microspheres before adhesion with the fine particle coating agent. The mixing method is not particularly limited, but may be carried out by using an apparatus having a very simple mechanism provided with a vessel and agitation blades. Also, a powder mixing machine conducting general swing or agitation may be used. As the powder mixing machine may be mentioned a swingable agitating or agitating powder mixing machine such as a ribbon type mixing machine, a vertical screw type mixing machine or the like. Further, a recent multi-functional powder mixing machine having a good efficiency by combining with an agitation device such as a supermixer (made by Kawata Co., Ltd.), a high-speed mixer (made by Fukae Co., Ltd.), a new gram machine (made by Seishin Kigyo Co., Ltd.), a SV mixer (made by Shinko-Kankyo Solution Co., Ltd.) or the like may be used.

[Heat-expandable microspheres]

The heat-expandable microspheres according to the invention are heat-expandable microspheres each constituted with an outer shell of a thermoplastic resin obtained by polymerizing the monomer component in the presence of the polymerization initiator, and a foaming agent encapsulated therein and having a boiling point not higher than a softening point of the thermoplastic resin, in which the foaming agent includes a fluorine-containing compound having an ether structure and a carbon number of 2-10 and containing no chlorine atom and bromine atom and a compression recovering ratio is not less than 82% when hollow fine particles obtained by heat-expanding the heat-expandable microspheres are subjected to a treatment of increasing an internal pressure.

In the heat-expandable microspheres according to the invention, the production method is not particularly limited, but the aforementioned production methods may be mentioned as a preferable method. The preferable limitations and explanation in the above production method may be also applied even in the heat-expandable microspheres according to the invention.

In the heat-expandable microspheres according to the invention, the compression recovering ratio when the hollow fine particles obtained by heat-expanding the heat-expandable microspheres are further subjected to the treatment of increasing the internal pressure is not less than 82%, particularly preferably not less than 84%, most preferably not less than 86%.

When the compression recovering ratio is not less than 82%, there is a strong interrelation that the excellent steady running durability is obtained when the hollow fine particles are subjected to the treatment of increasing the internal pressure and then filled into the interior of the tire-rim assembly. On the contrary, since there is a case that the interrelation is not clear between the compression recovering ratio of the hollow fine particles obtained by heat-expanding the heat-expandable microspheres according to the invention and the steady running durability when they after the treatment of increasing the internal pressure are filled into the interior of the tire-rim assembly, the ratio may not be said to be a preferable parameter for the properties. From such a reason, the properties may be evaluated by the compression recovering ratio of the hollow fine particles obtained by subjecting the heat-expandable microspheres to the treatment of increasing the internal pressure.

The hollow fine particles obtained by heat-expanding the heat-expandable microspheres have further heat-expanding, properties so that it is preferable that they are further subjected to the treatment of increasing the internal pressure. This treatment of increasing the internal pressure will be described later.

The ratio of the foaming agent encapsulated in the heat-expandable microspheres is not particularly limited, but is preferably 10-60 mass%, further preferably 15-55 mass%, more preferably 20-50 mass%, most preferably 25-45 mass% based on the total mass of the heat-expandable microspheres. When the ratio of the foaming agent encapsulated is within the above range, the average particle size of the heat-expandable microspheres and the expansion starting temperature fall into proper ranges, and hence the compression recovering ratio when the hollow fine particles obtained by heat-expanding the heat-expandable microspheres are further subjected to the treatment of increasing the internal pressure becomes higher. Further, when the hollow fine particles after the treatment of increasing the internal pressure are filled into the interior of the tire-rim assembly, the excellent steady running durability and high-speed running durability are obtained.

That is, when the ratio of the foaming agent encapsulated is less than 10 mass%, if the hollow fine particles obtained by heat-expanding the heat-expandable microspheres are filled into the space portion of the tire-rim assembly, there may be not developed the tire internal pressure giving function enough to attain the safe running at the time of tire injury, and the steady running durability may be deteriorated. While, when the ratio of the foaming agent encapsulated exceeds 60%, the thickness of each of the hollow fine particles obtained by the heat-expansion becomes very thin, so that the stability with the lapse of time may be lacking due to the occurrence of blow out of the foaming agent and the like.

Also, the average particle size of the heat-expandable microspheres is not particularly limited, but is preferably 5-50 $\mu$m, further preferably 8-45 $\mu$m, more preferably 10-40 $\mu$m.

When the average particle size of the heat-expandable microspheres is within the above range, the compression recovering ratio when the hollow fine particles obtained by heat-expanding are further subjected to the treatment of increasing the internal pressure is 82%. Further, when the hollow fine particles subjected to the treatment of increasing the internal pressure are filled into the interior of the tire-rim assembly, the excellent steady running durability and high-speed running durability are obtained.

Further, the variation coefficient CV of the particle size distribution in the heat-expandable microspheres is not particularly limited, but is preferably not more than 30%, further preferably not more than 27%, more preferably not more than 25%. Moreover, the variation coefficient CV of the particle size distribution is calculated by the following equations (1) and (2):

[Equation 1]

$$CV = (s/\langle x \rangle) \times 100 \ (\%) \qquad \cdots (1)$$

$$s = \{ \sum_{i=1}^{n} (x_i - \langle x \rangle)^2 / (n-1) \}^{1/2} \qquad \cdots (2)$$

wherein s is a standard deviation of particle size

<x> is an average particle size
$x_i$ is a i-th particle size
n is the number of particles.

The feature that the variation coefficient CV of the particle size distribution in the heat-expandable microspheres is within the above range is effective in the uniformization of true specific gravity in the hollow fine particles obtained by the heat-expansion and the uniformization of heat history of individual particles in the heat-expansion.

Now, as the particle size distribution of the heat-expandable microspheres is wide, the particle size distribution of the hollow fine particles heat-expanded accompanied therewith becomes wider and the distribution of true specific gravity becomes also wide. In general, small-size ingredient in the particle size distribution of the heat-expandable microspheres is large in the true specific gravity after the heat-expansion, while large-size ingredient is small in the true specific gravity after the heat-expansion. If it is intended to obtain hollow fine particles having the same average true specific gravity by heat-expanding the heat-expandable microspheres having the same average particle size, when the amount of the small-size ingredient included is large, a higher temperature is required in the heat-expansion, while when the amount of the large-size ingredient is large, the temperature in the heat-expansion becomes low. In such a case, excessively heat-expanded hollow fine particles, properly heat-expanded hollow fine particles and insufficiently heat-expanded hollow fine particles are existent in the group of the hollow fine particles obtained by the heat-expansion. Thus, when the hollow fine particles obtained by heat-expanding the heat-expandable microspheres having a large variation coefficient CV of the particle size distribution are subjected to the treatment of increasing the internal pressure and filled into the interior of the tire-rim assembly, the steady running durability and high-speed running durability may be deteriorated.

The expansion starting temperature Ts1 of the heat-expandable microspheres is not particularly limited, but it is effective to be controlled to preferably 120-210°C, further preferably 130-205°C, more preferably 140-200°C, most preferably 145-195°C.

When the expansion starting temperature Ts1 of the heat-expandable microspheres is within the above range, if the hollow fine particles obtained by heat-expanding the heat-expandable microspheres and subjected to the treatment of increasing the internal pressure are filled into the interior of the tire-rim assembly, the excellent high-speed running durability is obtained. In general, there is a relation of Ts1 $\geq$ Ts2 between the expansion starting temperature Ts1 of the heat-expandable microspheres and the expansion starting temperature Ts2 of the hollow fine particles obtained by heating the heat-expandable microspheres as a starting material. Therefore, when Ts1 is lower than 120°C, Ts2 becomes also lower than 120°C, and hence when the hollow fine particles obtained by heat-expanding the heat-expandable microspheres and subjected to the treatment of increasing the internal pressure are filled into the interior of the tire-rim assembly, they are not durable to heat generation due to the friction between the hollow fine particles during the high-speed running and the expansion or blow-out of the foaming agent may be caused.

[Production method of hollow fine particles]

The production method of the hollow fine particles according to the invention is characterized by comprising a step of flowing a gas fluid containing the heat-expandable microspheres into a gas inlet pipe provided at its outlet port with a dispersion nozzle and disposed inside a hot air stream and spraying from the dispersion nozzle (spray step), a step of colliding the gas fluid onto a collision plate disposed at a downstream side portion of the dispersion nozzle to disperse the heat-expandable microspheres into the hot air stream (dispersion step) and a step of heat-expanding the dispersed heat-expandable microspheres at not lower than the expansion starting temperature Ts1 in the hot air stream (expansion step).

In this production method, the heat-expandable microspheres may be the aforementioned heat-expandable microspheres or the heat-expandable microspheres obtained by the aforementioned production methods.

Concretely, it may be carried out by using a production apparatus provided with a foaming step part shown in FIG. 1. This foaming step part comprises a gas inlet pipe (not represented by numeral) provided at its outlet port with a dispersion nozzle 4 and disposed at a central portion, a collision plate 5 disposed at a downstream part of the dispersion nozzle 4, an overheat preventing cylinder 3 disposed around the gas inlet pipe at an interval, and a hot air nozzle 1 disposed around the overheat preventing cylinder at an interval. In the foaming step part, a gas fluid 6 including the heat-expandable microspheres is flowed into the gas inlet pipe in an arrow direction, and a gas stream 7 for improving the dispersibility of the heat-expandable microspheres and preventing an overheat of the gas inlet pipe and the collision plate is flowed into a space defined between the gas inlet pipe and the overheat preventing cylinder in an arrow direction, and further a hot air stream 8 for heat-expansion is flowed into a space defined between the overheat preventing cylinder 3 and the hot air nozzle 1. At this moment, the hot air stream 8, the gas fluid 6 and the gas stream 7 are usually flowed in the same direction, but are not necessarily the same direction. In to an interior of the overheat preventing cylinder 3 is flowed a cooling medium stream 2 for cooling in an arrow direction.

The gas inlet pipe and/or collision plate 5 are preferable to be provided with an overheat preventing function for suppressing the formation of aggregated microspheres or heat-fused body.

The shape of the collision plate is not particularly limited, but may include a fusiform shape, a conical shape, a pyramid shape, a spherical shape, a semi-spherical shape or a combination thereof.

In the spray step of the production method, the gas fluid 6 including the heat-expandable microspheres is flowed into the gas inlet pipe provided at its outlet port with the dispersion nozzle 4 and disposed inside the hot air stream 8 to spray the gas fluid 6 from the dispersion nozzle 4. The gas fluid 6 is not particularly limited as long as it is a fluid of a gas including the heat-expandable microspheres, but is preferable to be a fluid of an inert gas such as air, nitrogen, argon, helium or the like including the heat-expandable microspheres.

Also, the water content included in the gas fluid 6 is preferably not more than 30 $g/m^3$, further preferably not more than 9.3 $g/m^3$ considering poor dispersion of the heat-expandable microspheres and the like.

The flow rate of the gas fluid 6 is not particularly limited, but is preferable to be adjusted so that any heat-expandable microspheres can be heat-expanded in the hot air stream 8 while subjecting to the same heat history at the subsequent dispersion step.

At the dispersion step in the production method, it is operated to collide the gas fluid 6 onto the collision plate 5 disposed at the downstream side part of the dispersion nozzle 4 so as to evenly disperse the heat-expandable microspheres into the hot air stream 8. In this case, the gas fluid 6 discharged from the dispersion nozzle 4 is introduced toward the collision plate 5 together with the gas stream 7 and collided thereonto. As the gas stream 7, there may be used a gas similar to the gas fluid 6.

At the expansion step in the production method, the dispersed heat-expandable microspheres are heat-expanded at not lower than the expansion starting temperature Ts1 in the hot air stream 8. Thereafter, the heat-expanded microspheres, or hollow fine particles are recovered by passing through a cooling part or the like.

As to the recovery, it is preferable to use a general solid-gas separating device such as cyclone, bug filter or the like.

In this production method, the resulting hollow fine particles may have or have not the expansion starting temperature Ts2 through the control of the expansion conditions. At this moment, the feature that the hollow fine particles have the expansion starting temperature Ts2 means that the heat-expansion phenomenon is again observed by heating the hollow fine particles. Now, the temperature starting the heat-expansion of the hollow fine particles is called the expansion starting temperature Ts2. Also, the feature that the hollow fine particles have the expansion starting temperature Ts2 becomes synonymous with the feature that the expansion ratio at the maximum expansion temperature exceeds 100%. On the other hand, the feature that the hollow fine particles have not the expansion starting temperature Ts2 means that the microspheres are heat-expanded substantially completely.

The control of the expansion conditions is not particularly limited. For example, parameters such as feed amount of starting materials, flow amount of hot air, amount of gas dispersed from starting materials and the like are first fixed to certain values, and a temperature of the hot air stream (which may be referred to as "hot air temperature" hereinafter) is varied. Then, the hot air temperature is varied stepwise while fixing the other parameters to certain values, whereby the heat-expandable microspheres are heat-expanded at each temperature and the true specific gravity of the resulting fine particles is measured to prepare a graph plotting a relation between the hot air temperature (x-axis) and the true specific gravity (y-axis). In this graph, the temperature region corresponding to the lowest true specific gravity (minimum value in the graph) is set to the hot air temperature, whereby the resulting hollow fine particles can be produced so as not to have the expansion starting temperature Ts2.

Also, in case of producing the heat-expanded microspheres having a desired true specific gravity, the hot air temperature is set in correspondence with the true specific gravity in the graph. Thus, the expansion conditions are controlled, whereby there can be produced hollow fine particles having a desired re-expandable capacity or expansion starting temperature Ts2.

Further, when the feed amount of starting materials and/or the amount of gas dispersed from starting materials are varied, the expansion conditions are controlled by varying the hot air temperature and the like while considering heat quantity supplied from the hot air stream, total heat capacity of the heat-expandable microspheres as a starting material and the like. For example, when the feed amount of starting materials and the amount of gas dispersed from starting materials are increased, the hot air temperature is raised. when the feed amount of starting materials and the amount of gas dispersed from starting materials are decreased, the hot air temperature is lowered.

In this production method, the energy efficiency is high, and the temperature control is easy, and substantially the same heat history can be continuously given to any heat-expandable microspheres as a starting material, and the dispersibility in the gas stream is high. As a result, the change of the variation coefficient CV of the particle size distribution before and after the expansion is is small and the uniformity of the quality of the resulting hollow fine particles (particularly particle size distribution and distribution of true specific gravity) is high. That is, the formation of aggregated microspheres included in the resulting hollow fine particles can be suppressed as far as possible, and the content of the starting material or the slightly heat-expanded microspheres can be made very small.

[Hollow fine particles]

Each of the hollow fine particles according to the invention is constituted with an outer shell made of a thermoplastic resin, and a foaming agent encapsulated therein and having a boiling point not higher than a softening point of the thermoplastic resin. In the hollow fine particles, the compression recovering ratio when they are subjected to the treatment of increasing the internal pressure (i.e. compression recovering ratio after the hollow fine particles are further subjected to the treatment of increasing the internal pressure) is not less than 75%, and the foaming agent includes a fluorine-containing compound having an ether structure and a carbon number of 2-10 and containing no chlorine atom and bromine atom.

The hollow fine particles according to the invention are obtained by heat-expanding the heat-expandable microspheres and/or the heat-expandable microspheres obtained by the production method of the heat-expandable microspheres. In the hollow fine particles, the production method is not particularly limited as long as it includes a step of heat-expanding, but the aforementioned production method of the hollow fine particles may be mentioned as a preferable method. At this moment, the aforementioned preferable limitations and the description are applicable to the hollow fine particles.

The ratio of the foaming agent encapsulated in the hollow fine particles is not particularly limited, but is preferably 10-60 mass%, further preferably 15-55 mass%, more preferably 20-50 mass%, most preferably 25-45 mass% based on the total mass of the hollow fine particles. In the invention is used the foaming agent including the fluorine-containing compound with a property hardly permeating the thermoplastic resin constituting the outer shell, so that there is a small difference between the ratio of the foaming agent encapsulated in the heat-expandable microspheres and the ratio of the foaming agent encapsulated in the hollow fine particles, and the keeping ratio of the foaming agent is high.

When the ratio of the foaming agent encapsulated is within the above range, the average particle size and the expansion starting temperature $Ts2$ of the hollow fine particles become adequate, and the compression recovering ratio when the hollow fine particles are further subjected to the treatment of increasing the internal pressure becomes higher. Further, when the hollow fine particles after the treatment of increasing the internal pressure are filled into the tire-rim assembly, the excellent high-speed running durability is obtained.

That is, when the ratio of the foaming agent encapsulated is less than 10 mass%, if the hollow fine particles obtained by heat-expanding the heat-expandable microspheres are filled into the space portion of the tire-rim assembly, there may be not developed the tire internal pressure giving function enough to attain the safe running at the time of tire injury, and the steady running durability may also be deteriorated. While, when the ratio of the foaming agent encapsulated exceeds 60%, the thickness of each of the hollow fine particles obtained by the heat-expansion becomes very thin, so that the stability with the lapse of time may be lacking due to the occurrence of blow out of the foaming agent and the like.

The average particle size of the hollow fine particles is not particularly limited, but is preferably not less than 40 $\mu$m but not more than 200 $\mu$m, more preferably not less than 50 $\mu$m but not more than 150 $\mu$m, further preferably not less than 55 $\mu$m but not more than 140 $\mu$m, particularly preferably not less than 60 $\mu$m but not more than 130 $\mu$m, most preferably not less than 65 $\mu$m but not more than 120 $\mu$m.

When the average particle size of the hollow fine particles is within the above range, if the hollow fine particles after the treatment of increasing the internal pressure are filled into the interior of the tire-rim assembly, the excellent steady running durability and high-speed running durability are obtained.

The variation coefficient CV of the particle size distribution in the hollow fine particles is not particularly limited, but is preferably not more than 30%, further preferably not more than 27%, more preferably not more than 25%, most preferably not more than 23%. When the variation coefficient of the particle size distribution is within the above range, if the hollow fine particles are filled into the interior of the tire-rim assembly, the excellent steady running durability and high-speed running durability are obtained. As the particle size distribution of the hollow fine particles is wide, the distribution of its true specific gravity becomes wider. In general, small-size ingredient in the particle size distribution of the heat-expandable microspheres is large in the true specific gravity after the heat-expansion, and large-size ingredient is small in the true specific gravity after the heat-expansion. If it is intended to obtain hollow fine particles having the same average true specific gravity by heat-expanding the heat-expandable microspheres having the same average particle size, when the amount of the small-size ingredient is large, a higher temperature is required in the heat-expansion, while when the amount of the large-size ingredient is large, a lower temperature becomes sufficient in the heat-expansion. In such a case, excessively heat-expanded hollow fine particles, properly heat-expanded hollow fine particles and insufficiently heat-expanded hollow fine particles are existent in the group of the hollow fine particles. Thus, when the hollow fine particles obtained by heat-expanding the heat-expandable microspheres having a large variation coefficient CV of the particle size distribution are subjected to the treatment of increasing the internal pressure and filled into the interior of the tire-rim assembly, the steady running durability and high-speed running durability may be deteriorated.

The average true specific gravity of the hollow fine particles is not particularly limited, but is preferably not less than 0.010 g/cm$^3$ but not more than 0.060 g/cm$^3$, more preferably not less than 0.015 g/cm$^3$ but not more than 0.060 g/cm$^3$, further preferably not less than 0.018 g/cm$^3$ but not more than 0.055 g/cm$^3$, particularly preferably not less than 0.020 g/cm$^3$ but not more than 0.050 g/cm$^3$, most preferably not less than 0.023 g/cm$^3$ but not more than 0.045 g/cm$^3$.

When the average true specific gravity is within the above range, if the hollow fine particles are filled into the interior of the tire-rim assembly, the excellent steady running durability and high-speed running durability are obtained. When the average true specific gravity is less than 0.010 g/cm$^3$, the thickness of each of the hollow fine particles becomes very thin, so that the stability with the lapse of time may be lacking due to the blow out of the foaming agent and the like. Also, when the average true specific gravity exceeds 0.060 g/cm$^3$, if the hollow fine particles are filled into the interior of the tire-rim assembly, the heat generation is increased due to the friction between the hollow fine particles during the high-speed running and hence they are not durable to the heat generation, and the expansion or blow-out of the foaming agent may be caused.

The hollow fine particles are preferable to have the expansion starting temperature Ts2. The expansion starting temperature Ts2 of the hollow fine particles is not particularly limited, but is preferably not lower than 120°C but not higher than 200°C, further preferably not lower than 130°C but not higher than 195°C, more preferably not lower than 140°C but not higher than 190°C, most preferably not lower than 150°C but not higher than 185°C.

When the expansion starting temperature Ts2 of the hollow fine particles is within the above range, if the hollow fine particles are filled into the interior of the tire-rim assembly, the excellent steady running durability and high-speed running durability are obtained. That is, when Ts2 is lower than 120°C, if the hollow fine particles after the treatment of increasing the internal pressure are filled into the interior of the tire-rim assembly, they are not durable to the heat generation due to the friction between the hollow fine particles during the high-speed running, and the expansion or blow-out of the foaming agent may be caused.

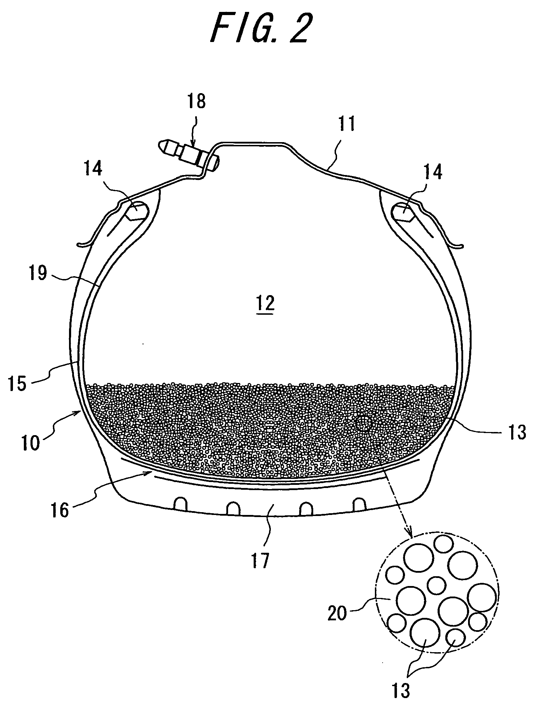

Moreover, the hollow fine particles are subjected to the treatment of increasing the internal pressure as mentioned later and then filled into the interior of the tire-rim assembly as shown in FIG. 2, whereby the excellent high-speed running durability is given in addition to the excellent steady running durability.

That is, FIG. 2 is a widthwise section view illustrating a tire-rim assembly aiming at the invention.

In the illustrated tire-rim assembly, a tire 10 is assembled onto a rim 11 and many hollow fine particles 13 are filled into a tire chamber 12 defined by the tire 10 and the rim 11 under pressure.

As long as the tire 10 is a tire for various automobiles according to the specifications such as tire for truck and bus, tire for passenger car or the like, the structure of the tire is not particularly limited. That is, the invention is a technique applicable to any safety tires as a tire-rim assembly. The illustrated tire is a typical tire for automobile wherein a belt 16 and a tread 17 are arranged on a crown portion of a carcass 15 toroidally extending between a pair of bead cores 14 outwards in a radial direction in this order.

In this figure, numeral 18 is a valve for supplying and discharging a gas to the tire chamber 12, and numeral 19 an innerliner layer, and numeral 20 spaces around the hollow particles 4.

The hollow fine particles 13 are hollow bodies having a closed cell(s) surrounded by a continuous resin phase of substantially a spherical form and having a particle size distribution at an average particle size of not less than about 40 μm but not more than about 200 μm, or spongy structural bodies containing many small chambers made of closed cells. That is, the hollow fine particles are particles including a closed cell(s) therein without communicating to exterior, wherein the number of the closed cells may be singular or plural. In this specification, "interior portion of closed cells in the group of hollow fine particles" collectively means "hollow portion".

Also, the feature that the particle has the closed cell means that the particle has "a shell made of a resin" for including the closed cell at a closed state, and further the continuous phase of the resin means "a continuous phase of a component composition constituting the shell of the resin". Moreover, the composition of the resin shell is previously mentioned.

The hollow fine particle group made of many hollow fine particles 13 is filled and disposed inside the tire chamber 12 together with a high pressure gas, whereby "internal pressure used" of the tire is partly born under normal use conditions, while when the tire 10 is injured, the above group is a source developing the function of restoring a pressure lost in the tire chamber 12. The "function of restoring internal pressure" will be described later.

The "internal pressure used" means "a pressure value of tire chamber (gauge value of pressure) every mounting position designated in each vehicle by a car maker".

In the light of recent status on high performances and high speedup of vehicles, it is important that the hollow fine particles arranged in the tire chamber develop the expected function. For this end, it is demanded to further improve the durability of the hollow fine particles.

Now, the inventors have made various studies on the revelation of heat generation in the hollow fine particles as regards the durability of the hollow fine particles, concretely heat resistance thereof, and attained the further improvement of the durability (heat resistance) of the hollow fine particles. At first, the hollow fine particles are obtained by heat-expanding the aforementioned heat-expandable microspheres as a starting material, in which the expansion starting temperature Ts1 is existent in the heat-expandable microspheres. Moreover, when the hollow fine particles obtained by heat-expansion are again heated from room temperature, the further expansion of the hollow fine particles is started, so that the expansion starting temperature Ts2 is existent in the hollow fine particles.

The inventors have produced hollow fine particles from many kinds of expandable resin particles and made various examinations, and hence used Ts1 as an indication of the heat resistance, but found that Ts2 is suitable as an indication of the heat resistance.

Firstly, the expansion behavior is observed in case of heat-expanding the expandable resin particles. Since the expandable resin particles are at a stage before the expansion, the particle size is extremely small as compared with the state of hollow fine particles and the thickness of the shell portion made of the resin is very thick. Therefore, the stiffness as a microcapsule is at a higher state.

On the other hand, when the hollow fine particles are again heat-expanded, the thickness of the shell portion in the hollow fine particles is extremely thin and the stiffness as a hollow body is at a lower state. Therefore, Ts2 is positioned at a state lower than Ts1.

In the invention, the further expansion property of the hollow fine particles expanded once is utilized instead of the utilization of the expansion property of the expandable resin particles, so that Ts2 should be used as an indication instead of the conventional Ts1 for discussing the heat resistance.

The Ts2 of the hollow fine particles is preferable to be not lower than 120°C but not higher than 200°C. When Ts2 of the hollow fine particles is lower than 120°C, the re-expansion of the hollow fine particles may be started before the speed of the tire arrives at the guarantee speed in accordance with the selected tire size.

While, when it exceeds 200°C, a part of the hollow fine particles is broken during the steady running to lower the filling ratio, or even if violent temperature rise resulting from the heat generation due to the friction between the hollow fine particles is caused during the run-flat running after the puncture, it can not arrive at the expansion starting temperature Ts2, and hence "internal pressure reviving function" may not be developed sufficiently.

As mentioned above, the hollow fine particles having the expansion starting temperature Ts2 according to the above upper and lower limit values are arranged in the tire chamber, whereby the internal pressure reviving function is developed surely, but also the heat resistance during the high speed running is improved to attain "retention of internal pressure reviving function" in the steady running.

Then, there will be mentioned basic features for serving the tire-rim assembly wherein the hollow fine particles having the improved durability are arranged in the tire chamber as a safety tire.

In the conventional pneumatic tire, as the running is continued at a state that the pressure in the tire chamber drops to the atmospheric pressure, the tire is largely deflected under loading and the side portion comes into contact with the road surface, and hence the carcass member as a skeleton is fatigued by the heat generation due to the friction with the road surface and the repetitive bending deformation and finally the worn damage of the side portion passes through the tire chamber to cause the breakage.

In the invention, when the gas in the tire chamber is leaked out due to the injury, it is a main object to revive the lost pressure by properly applying a pressure required in the subsequent running at minimum to the tire chamber. According to the invention, the tire-rim assembly is grasped as a pressure vessel. That is, the above object is achieved by provisionally sealing a site of the pressure vessel damaged due to the puncture with the hollow fin particle group arranged in the tire chamber and functioning the hollow fine particles to revive the lost pressure. For this end, there should not be caused the feature that the running after the puncture itself brings about the failure and breakage of the tire or the pressure vessel as described in the conventional pneumatic tire.

Therefore, it is important that even if the pressure in the tire chamber drops to the atmospheric pressure, the above function is prematurely developed to avoid the aforementioned tire breakage and to function as the pressure vessel. To this end, it is important to prematurely revive the pressure in the tire chamber to "at least a pressure not coming the tire side portion into contact with the ground".

More concretely, as to the hollow fine particles arranged in the tire chamber, it is preferable that a filling ratio of the hollow fine particles according to the following equation (I) is not less than 5 vol% but not more than 80 vol%.

$$\text{Filling ratio of hollow fine particles} = (\text{volume value of particles}/\text{volume value of tire chamber}) \times 100 \ldots (I)$$

In this case, the volume value of particles is a sum ($cm^3$) of a total volume of all hollow fine particles arranged in the tire chamber under an atmospheric pressure and a space volume around the particles, and can be calculated by the following method.

Firstly, an average bulk specific gravity of the particles is determined under the atmospheric pressure. The calculation is conducted by measuring mass of the particles, the volume of which being known under the atmospheric pressure. At first, the particles are weighed in a measuring cylinder under the atmospheric pressure and oscillations are applied thereto in a ultrasonic water bath to render packing of the particles into a stable state and then total volume of the particles (including space volume around the particles) and total mass of the particles are measured, whereby the average bulk specific gravity under the atmospheric pressure is calculated. That is, the average bulk specific gravity of the particles under the atmospheric pressure is

$$\text{Average bulk specific gravity of particles under atmospheric pressure}$$

$$= (\text{total mass of particles})/(\text{total volume of particles}).$$

Then, the total mass of the particles arranged in the tire chamber is measured, which is divided by the above calculated average bulk specific gravity of the particles under the atmospheric pressure, whereby "volume of particles" arranged in the interior of the tire can be calculated. That is,

$$\text{Volume of particles} = (\text{total mass of particles filled in tire})/(\text{average}$$

$$\text{bulk specific gravity of particles under atmospheric pressure}).$$

Moreover, the particles having a desired particle volume can be arranged in the tire even by a method wherein particles are weighed in a vessel having a known volume and then arranged in the tire chamber.
Also, the volume value of the tire chamber is a value ($cm^3$) determined from the following equation (II) using a discharge amount of filled air ($cm^3$) when only air is filled into the tire-rim assembly to adjust to an internal pressure used (kPa) and then the filled air is discharged until the internal pressure is rendered into the atmospheric pressure.

$$\text{Volume value of tire chamber} = (\text{discharge amount of filled}$$

$$\text{air})/(\text{internal pressure used/atmospheric pressure}) .... (\text{II})$$

In the equation (II), the internal pressure used uses a gauge pressure value (kPa) and the atmospheric pressure value uses an absolute value (kPa) in an air gauge. That is, the atmospheric pressure is represented 0 [kPa] as a gauge pressure, but the value of the atmospheric pressure itself varies every day and every hour, so that an absolute value observed from the air gauge at that time is used. For example, when the atmospheric pressure at a certain time is 1013 hPa, the equation (II) uses 101.3 kPa as an absolute value of the atmospheric pressure.
As to the reason why the filling ratio of the above hollow fine particles is limited to not less than 5 vol% but not more than 80 vol%, the explanation will be made to embodiments from steady use to puncture state in this order.
At first, there is described the case that many hollow fine particles are arranged in the tire chamber and further a high-pressure gas is filled into the tire chamber to render the pressure in the tire chamber into an internal pressure used.
In the invention, it is important that the hollow fine particles 4 are arranged in the tire chamber 3 and thereafter a high-pressure gas such as air, nitrogen or the like is filled so as to render space portions 10 around the particles 4, i.e. the pressure in the tire chamber into a desired internal pressure used such as internal pressure designated in a vehicle to be mounted or the like. When the hollow fine particles 4 are arranged in the tire chamber 3 and further the pressure in the tire chamber 3 is set to a desired pressure by filling the gas, since the pressure of the hollow portion in the hollow fine particles (pressure in the closed cell) is first smaller than the pressure of the tire chamber, the hollow fine particles are compressed to cause volume reduction. At this time, the form of the hollow fine particles is not substantially the spherical form, but is at a distorted state of flattening from the spherical form. As the running of the tire is started at the flattened and distorted state of the particle form, the hollow fine particles are apt to be easily broken due to the collision between the particles and the collision to the inner faces of the tire and the rim as compared with the case of spherical form. That is, when the hollow fine particles are at the flattened and distorted state, input fur to the collision can not be dispersed uniformly and the big disadvantage is produced in view of the durability.
On the other hand, the flattened and distorted hollow fine particles are at a state of reducing the volume by the difference between the pressure in the hollow portion and the pressure in the tire chamber. However, when the pressure of the tire chamber (space portions around the particles) is kept over a certain period of time, the pressure of the hollow portion in the hollow fine particles, i.e. the pressure of the closed cell in these particles can be increased to an extent corresponding to the pressure of the tire chamber. Since the hollow fine particles are deformed at the flattened state, force of returning to substantially the original spherical form acts to the shell portions thereof. Also, the pressure of the hollow portion in the flattened hollow fine particles is not higher than the pressure of the tire chamber, molecules of the gas in the tire chamber pass through the shell of the continuous phase made of the resin and penetrates into the hollow portion for eliminating the pressure difference. Furthermore, the hollow portion in the hollow fine particles is a closed cell and the inside thereof is filled with a gas resulted from the foaming agent, which may be different from the gas of the tire chamber (space portions around the particles). In this case, the high-pressure gas in the tire chamber penetrates into the hollow portion in the particles according to the above simple pressure difference but also difference of partial pressure of gases until the difference of partial pressure is eliminated. Thus, the high-pressure gas in the tire chamber penetrates into the hollow portion in the hollow fine particles with the lapse of time, so that the pressure in the tire chamber is decreased by a quantity penetrated into the hollow portion. In order to supplement the quantity penetrated into the hollow portions of the hollow fine particles, therefore, the desired pressure is continuously applied in addition to the filling of the high-pressure gas, whereby there can be obtained the tire according to the invention having a pressure adjusted to the desired internal pressure used.

Thus, the pressure of the hollow portion in the hollow fine particles approaches to the pressure of the tire chamber (space portions around the particles) to restore the volume of the particles once decreased, and hence the form of the particles is returned from the flattened and distorted form to substantially the original spherical form. On the way of returning the form, the pressure of the hollow portion in the hollow fine particles can be increased to at least 70% of the pressure of the tire chamber to return the particle form from the flattened state to substantially the spherical form, whereby the durability of the particles can be guaranteed.

According to the above technique, the high-pressure gas is interposed around the hollow fine particles, so that the load born by the hollow fine particles during the steady running can be vanishingly reduced. In addition, the particle form is returned to substantially the spherical form in the hollow fine particles having the restored particle volume, so that the fatigue applied to the particles accompanied with the repetitive deformation during the rotation of the tire or the breakage can be reduced largely, and hence the durability of the particles is never damaged. In order not to damage the durability of the hollow fine particles, it is preferable that the pressure of the hollow portion in the hollow fine particles is at least 70% of the desired pressure in the tire chamber on the way of increasing the pressure of the hollow portion in the particles while restoring the volume of the particles under an environment that the pressure of the tire chamber is the desired high pressure such as an internal pressure designated by a vehicle to be mounted or the like. Further, it is recommended to set the pressure to a high value of not less than 80%, not less than 90% and not less than 100%.

In order to obtain a tire-rim assembly wherein the pressure of the hollow portion in the hollow fine particles is at least 70% of the desired pressure of the tire chamber, the pressure of the gas in the spaces around the hollow fine particles is kept at a state of increasing to not less than 70% of the desired pressure in the tire chamber such as at least an internal pressure designated by a vehicle to be mounted or the like, and it is enough to continue the application of such a pressure over an appropriate time. Alternatively, the desired tire-rim assembly can be obtained by arranging the hollow fine particles in a pressure vessel other than the tire, keeping a pressure in spaces around the particles at a state of increasing to at least not less than 70% of the desired pressure of the tire chamber, storing the pressure vessel over an appropriate time while applying such a pressure, and then arranging the hollow fine particles having the increased pressure of the hollow portion in the particles into the tire chamber together with an atmosphere therearound.

Moreover, the above appropriate keeping time may be set considering the permeation of space gas to the shell portion of the hollow fine particles or the continuous phase of the particles and the difference of partial pressure between the gas in the hollow portion of the particles and the space gas.

The pressure of the hollow portion in the hollow fine particles can be set to the desired range by properly selecting and adjusting the kind and pressure of the gas to be filled into the tire chamber (space portions around the particles) according to the above mechanism and the course of changing the form and volume of the particles.

As mentioned above, when the hollow fine particles wherein the pressure of the hollow portion in the particles is at least 70% of the desired pressure of the tire chamber are arranged in the tire chamber, if the tire is run from a state that the pressure of the tire chamber is an atmospheric pressure, it is required that the pressure in the tire chamber is restored to such a pressure of the tire chamber that at least side portion of the tire does not come into contact with the ground.

There will be described the mechanism of restoring the tire internal pressure below.

In the tire-rim assembly wherein the hollow fin particle group is arranged in the tire chamber, if the tire is injured, the high-pressure gas existing in spaces 10 between the hollow fine particles 4 leaks out from the tire chamber toward the outside of the tire, and hence the pressure in the tire chamber drops to a pressure equal to the atmospheric pressure. In the process of dropping the pressure of the tire chamber, the following features are caused in the tire chamber.

Firstly, as the drop of the pressure in the tire chamber starts due to the injury of the tire, many hollow fine particles seal the injured portion to suppress the rapid dropping of the pressure in the tire chamber. In the invention, the pressure of the hollow portion in the hollow fine particles is defined to be not less than 70% of a tire internal pressure at least designated by a vehicle in the normal running use, but the sealing capacity of the injured portion is dependent upon the pressure of the hollow portion. That is, when the pressure of the hollow portion is not less than 70%, substantially the spherical form can be kept as previously mentioned, and good fluidity and elasticity can be developed by keeping substantially the spherical form, so that the criticality of sealing the injured portion is largely improved as compared with the case that the pressure of the hollow portion is low. Moreover, the criticality of sealing the injured portion means a sealable size of an injured site.

On the other hand, the deflecting quantity of the tire increases with the dropping of the pressure in the tire chamber, and the volume of the tire chamber decreases. Further, the tire is largely deflected as the pressure of the tire chamber drops, and hence the hollow fine particles arranged in the tire chamber are subjected to inputs of compression and shear while sandwiching between the inner face of the tire and the inner face of the rim.

The pressure of the hollow portion in the hollow fine particles existing under the above internal pressure used (cell pressure in the closed cell) is existent in the tire chamber while keeping the high pressure corresponding to the internal pressure used even after the injury or keeping the particle volume before the injury and the pressure of the hollow portion. Therefore, as the tire is further run, the hollow fine particles themselves directly bear the load and the friction between the hollow fine particles is caused to conduct self-heating, whereby the temperature of the hollow fine particles in the tire chamber rises rapidly. If such a temperature exceeds the heat-expansion starting temperature of the hollow fine particles (Ts2: corresponds to glass transition temperature of the heat-expandable resin), the shells of the particles start in softening. At this time, since the pressure of the hollow portion in the hollow fine particles is a high pressure corresponding to the internal pressure used but also the pressure of the hollow portion is further raised by the rapid rise of the temperature of the hollow fine particles, the volume of the hollow fine particles is heat-expanded at once to compress the gas in the spaces around the particles, and hence the pressure in the tire chamber can be restored to such a pressure in tire chamber that at least a side portion of the tire does not contact with the ground.

When the pressure of the hollow portion in the hollow fine particles is set to a high pressure capable of conducting heat-expansion by the above mechanism, the function of restoring the internal pressure can be developed.

That is, in order to restore the pressure in the tire chamber to a tire internal pressure not causing the contact of the side portion with the ground, it is important that the hollow fine particles having a pressure of hollow portion corresponding to at least 70% of internal pressure used are arranged in the tire chamber at a filling ratio of not less than 5 vol% but not more than 80 vol%. The reason is as follows.

When the filling ratio of the hollow fine particles is less than 5 vol%, though the sealing of the injured portion is carried out without trouble, the absolute amount of the hollow fine particles is lacking, and hence it is difficult to provide the sufficient restoring of the internal pressure to a pressure level not causing the contact of the side portion with the ground. While, when the filling ratio of the hollow fine particles exceeds 80 vol%, since the heat generation is caused due to the friction between the particles during high-speed running in normal use depending on the tire, the hollow fine particles are heat-expanded over the expansion starting temperature (Ts2), and hence the function of restoring the internal pressure as a main function of the invention may be lost. The heat generation of the particles during the high-speed running in normal use will be described later.

In order to surely develop the function of restoring the internal pressure, it is important to surely seal the injured portion prior to the development of the function of restoring the internal pressure. That is, if the sealing of the injured portion is incomplete, the restored pressure leaks out from the injured portion, and hence the pressure obtained by the function of restoring the internal pressure temporarily contributes to the subsequent running capacity and there is a fear that the running performance after the injury can not be guaranteed. Since the hollow fine particles are particles being low in the specific gravity owing to the hollow structure and rich in the elasticity, as the tire is injured and the gas in the spaces around the hollow fine particles starts in the leaking from the injured portion, the particles immediately close in the injured portion together along the leaked flow of the gas and instantly seal the site of the injured portion. As mentioned above, the function of sealing the injured portion with the hollow fine particles is an essential function supporting the function of restoring the internal pressures according to the invention.

In the tire-rim assembly filled with the particles according to the invention, the friction between the hollow fine particles is caused by the decrease of volume of the tire chamber and the increase of the deflecting quantity of the tire associated with the drop of the internal pressure after the puncture to conduct the rapid temperature rise of the particles and the restoring of the internal pressure through the expansion of the particles, whereby the safety running can be attained after the puncture.

In the tire-rim assembly, the friction between the hollow fine particles is caused even in the normal running though it is slight. However, the generated friction heat itself is small in a region that the running speed is not more than 100 km/h, and hence the balance is kept by discharging heat toward ambient air during the running.

However, in a high-speed region exceeding 150 km/h, or further under an extremely hot environment that the temperature of ambient air is considerably high, the heat discharge toward the ambient air becomes at a lacking state though the generated friction heat increases, and hence the temperature environment of the hollow fine particles may be deteriorated remarkably. As such a state is continued over a long time of period, the temperature of the hollow fine particles exceeds the heat-expansion starting temperature (Ts2) to heat-expand the particles, and hence the aforementioned "function of restoring the internal pressure" in the puncture may be lost.

The inventors have made various studies in order to solve the above problem and found out novel hollow fine particles capable of preventing "the loss of internal pressure restoring function" due to the heat generation of the hollow fine particle group during high-speed running and conducting normal running at a higher speed.

That is, when the tire is rotated at a high speed, centrifugal force is generated in correspondence with the speed. Similarly, the hollow fine particle group arranged in the tire chamber is also subjected to centrifugal force. This centrifugal force is proportional to the mass of the particles and proportional to square of the speed and inversely proportional to the radius of the tire. Further, a certain deflection is caused by bearing the load on the tire and a region contacting with ground becomes at a state parallel to the road surface, so that such a ground contact region has not a curvature and the centrifugal force becomes substantially zero. Therefore, the hollow fine particles in the tire-rim assembly rotating under loading are placed "under repetitive inputs of centrifugal force varied" that they are subjected to the centrifugal force at a no-contact region as mentioned above while the centrifugal force is escaped at the moment of coming into the ground contact region.

Therefore, as the hollow fine particle group arranged in the tire chamber, it is preferable to suppress the mass of the particles as far as possible. That is, it is preferable to select the average true specific gravity of the hollow fine particles as small as possible, and also the filling ratio of the hollow fine particles in the tire chamber is preferably selected so as to be as small as possible within the aforementioned range of "filling ratio developing the sufficient function of restoring internal pressure to a pressure level that the side portion does not contact with ground".

When the filling ratio of the hollow fine particles is less than 5 vol%, it is difficult to obtain the sufficient restoring of internal pressure to a pressure level that the side portion does not contact with ground depending on the tire. While, when the filling ratio of the hollow fine particles exceeds 80 vol%, since the heat generation is caused due to the friction between the particles during high-speed running in normal use depending on the tire, the hollow fine particles are heat-expanded over the expansion starting temperature (Ts2), and hence the function of restoring the internal pressure as a main function of the invention may be lost. Therefore, the preferable range of the filling ratio of the hollow fine particles is not less than 5 vol% but not more than 80 vol%, further not more than 70 vol%, not more than 60 vol% and not more than 50 vol%.

Also, the average true specific gravity of the hollow fine particles is preferably a range of 0.010-0.060 g/cm$^3$. When it is less than 0.010 g/cm$^3$, the durability of the hollow fine particles under normal running lowers and the aforementioned "function of restoring internal pressure" in the normal use may be lost. While, when it exceeds 0.060 g/cm$^3$, the input of centrifugal force varied in the normal high-speed running becomes large and the quantity of heat generation may be large.

In this case, the hollow fine particle group arranged in the tire chamber has a distribution in the true specific gravity, but each of the hollow fine particles has not the same value of true specific gravity. As the reason are mentioned a non-uniformity of heat history in the heat-expansion and a keepability of gas expanded by the foaming agent. In the course that each of the "expandable resin particles" as a starting material for the hollow fine particles is heat-expanded to form each of hollow fine particles, if the heat history in the heating is non-uniform, hollow fine particles heat-expanded by sufficiently subjecting to the heat history are existent together with hollow fine particles stopping the expansion on the way because the heat history applied is less. Also, in the "expandable resin particles", when the particle size is small, the thickness of the continuous phase as a shell of the particle (means a surface skin including the foaming agent) is relatively thin, while when the particle size is large, the thickness of the shell is thick. Even when the heat history in the heating is same, the keepability of the gas heat-expanded in the hollow fine particles is dependent on the absolute thickness of the shell. Therefore, "expandable resin particles" having a small particle size before expansion form hollow fine particles having a low keepability of expanded gas and a low expansion ratio because the shell is thin, and the true specific gravity becomes large. On the other hand, "expandable resin particles" having a large particle size form hollow fine particles having a high keepability of expanded gas and a high expansion ratio because the shell is thick, and they can grow to a larger particle size and hence the true specific gravity becomes small. That is, the hollow fine particles obtained by the expansion of the heat-expandable composition such as microcapsule or the like typically have a distribution in the particle size at the heat-expanded state, in which there is a relation that hollow fine particles having a small particle size are large in the true specific gravity and hollow fine particles having a large particle size are small in the true specific gravity.

Therefore, the sufficiently heat-expanded hollow fine particles are small in the true specific gravity, while hollow fine particles stopping the expansion on the way are large in the true specific gravity. When the hollow fine particle group having such a distribution of true specific gravity is arranged in the tire chamber, it is subjected to centrifugal force depending on the speed during the running under normal internal pressure. In this case, the particles having a large true specific gravity are subjected to a larger centrifugal force in the tire chamber as compared with the particles having a small true specific gravity. As a result, particle group having a small true specific gravity is existent in the vicinity of the inner face of the wheel in the tire-rim assembly, while hollow fine particle group having a large true specific gravity is existent as gradually separated from the center of rotation. Also, particle group having a largest true specific gravity is existent in the innerliner side beneath the tread, so that the particle groups have a gradient in the true specific gravity from the inner face side of the wheel toward the innerliner side beneath the tread (toward outside in the radial direction of the rotating tire).

As the tire is placed under the aforementioned "repetitive varied inputs", the hollow fine particle group having a large true specific gravity produces a large inertia force under the varied input at the ground contact area as compared with the hollow fine particle group having a small true specific gravity. As a result, the hollow fine particle group having a large true specific gravity moves so as to push through the co-existing "hollow fine particle group having a smaller true specific gravity", extra friction heat among the particles is generated by a difference of motion energy resulted from a relative difference of inertia force between particles having a small true specific gravity and particles having a large specific gravity, whereby the heat generation property of the particles as a whole is deteriorated. That is, the factor of generating heat in the hollow fine particles is the relative difference of inertia force between the particle group having a small true specific gravity and the particle group having a large specific gravity and the friction heat generation due to the motion thereof.

In order to suppress the friction heat generation, therefore, it is first mentioned that the distribution width of true specific gravity in the hollow fine particles is made narrower as a means for making small the relative difference of inertia force. For example, from hollow fine particles having certain true specific gravities are removed particles of large true specific gravity side (small particle size side) and particles of small true specific gravity side (large particle size side) at the same volume ratio, whereby the distribution width of true specific gravity can be narrowed without changing the average true specific gravity, so that it is possible to suppress the aforementioned relative difference of inertia force and the heat generation of the hollow fine particle group as a whole can be suppressed.

Secondly, the average true specific gravity is made small by directly removing only the particles of large true specific gravity side (small particle size side) as a heat generating source while narrowing the distribution of true specific gravity, whereby not only the relative difference of inertia force but also the level of inertia force itself are suppressed and further the heat generation of the hollow fine particle group as a whole can be suppressed.

The average particle size of the hollow fine particles is preferable to be a range of 40 $\mu$m to 200 $\mu$m. When the average particle size of the hollow fine particles is less than 40 $\mu$m, the aforementioned distribution of true specific gravity is widened and the heat generation property may be deteriorated by the relative difference of inertia force between the particle group having a small true specific gravity and the particle group having a large specific gravity and the friction heat generation due to the motion thereof. While when the average particle size of the hollow fine particles exceeds 200 $\mu$m, at a state that the particles collide with each other under normal running or at a state that the hollow fine particles directly bear the load during the running when the pressure in the tire chamber becomes atmospheric pressure due to the puncture, the particles are selectively broken form the large particle size side, and hence there is a disadvantageous fear that the desired running performance after the puncture is not obtained.

As a gas constituting the hollow portion (closed cell) in the hollow fine particles is mentioned at least one selected from the group consisting of nitrogen, air, straight and branched aliphatic hydrocarbons having a carbon number of 2 to 8 and fluorides thereof, an alicyclic hydrocarbon having a carbon number of 2 to 8 and a fluoride thereof, and an ether compound represented by the following general formula (III):

$$R^1\text{-}O\text{-}R^2..... \qquad (III)$$

(wherein $R^1$ and $R^2$ are independently a monovalent hydrocarbon group having a carbon number of 1 to 5, provided that a part of hydrogen atom in the hydrocarbon group may be substituted with fluorine atom). Also, the gas filled in the tire chamber may be air, but When the gas in the particles is not a fluoride, a gas containing no oxygen, for example, nitrogen, an inert gas or the like is preferable in view of the safeness.

Moreover, the method of producing hollow fine particles having a closed cell(s) is not particularly limited, but a method wherein "expandable resin particles" are obtained using the foaming agent and then heat-expanded is usual. As the foaming agent may be mentioned a way for utilizing vapor pressure of high-pressure compressed air, liquefied gas or the like, a way for utilizing a heat-decomposable foaming agent which generates a gas by heat-decomposition, and the like. Particularly, many heat-decomposable foaming agents are characterized by generating nitrogen, so that particles obtained by properly controlling the reaction of expandable resin particles formed by the foaming thereof mainly contain nitrogen in their cells. The heat-decomposable foaming agent is not particularly limited, but may preferably include dinitrosopentamethylene tetramine, azodicarbon amide, paratoluene sulfonylhydrazine and derivatives thereof, and oxybisbenzene sulfonylhydrazine.

There is described the way for obtaining "expandable resin particles" for hollow fine particles by utilizing a vapor pressure of a high-pressure compressed gas, liquefied gas or the like below.

This is a method wherein in the polymerization of the continuous phase made of the resin forming the particles, at least one selected from straight and branched aliphatic hydrocarbons having a carbon number of 2 to 8 and fluorides thereof, an alicyclic hydrocarbon having a carbon number of 2 to 8 and a fluoride thereof, and an ether compound represented by the following general formula (III):

$$R^1-O-R^2 \ldots \qquad (III)$$

(wherein $R^1$ and $R^2$ are independently a monovalent hydrocarbon group having a carbon number of 1 to 5, provided that a part of hydrogen atom in the hydrocarbon group may be substituted with fluorine atom) is liquefied under a high pressure as a foaming agent and dispersed into a reaction medium to conduct emulsion polymerization. Thus, there can be obtained "expandable resin particles" wherein the above-mentioned gas component is sealed in the resin continuous phase as a foaming agent of liquid state, and also the desirable hollow fine particles can be obtained by heat-expanding them.

In order to give a minimum internal pressure by the hollow fine particles at a state of dropping the pressure of the tire chamber due to the puncture, it is important that the gas sealed into the hollow portion of the particles at a given pressure does not leak outward from the particles, i.e. the continuous phase of the resin corresponding to the shell portion of the hollow fine particles has a gas impermeable property. Namely, the resin constituting the continuous phase is important to be made from a material having a low gas permeation, concretely at least one of acrylonitrile copolymer, acrylic copolymer and vinylidene chloride copolymer. These materials are particularly effective in the invention because they have a flexibility as a hollow fine particles against input through the deformation of the tire.

Especially, it is preferable to apply any of the acrylonitrile copolymer, acrylic copolymer and vinylidene chloride copolymer to the continuous phase of the hollow fine particles. More concretely, a polymer wherein a monomer constituting the polymer is selected from acrylonitrile, methacyrlonitrile, methylmethacrylate, methacrylic acid, and vinylidene chloride is adaptable, and at least one selected from acrylonitrile/methacrylonitrile/methylmethacrylate terpolymer and acrylonitrile/methacrylonitrile/methacrylic acid terpolymer is advantageously adaptable. These materials are small in the gas permeation coefficient and hardly permeate the gas, so that the gas inside the hollow portion in the hollow fine particles hardly leaks out toward exterior and the pressure of the hollow portion can be kept adequately.

When the hollow fine particles are arranged in the tire chamber according to the invention, in order to enhance the sealing function on the tire injured portion at the time of injury, it is effective to incorporate many foamed bodies having an average bulk specific gravity larger than the average true specific gravity of the hollow fine particles into the group of the hollow fine particles. Concretely, it is possible to prolong the developing period of the function of restoring the internal pressure and increase the running capacity after the tire injury by adding many foamed bodies of substantially the spherical form having a diameter of 1-15 mm or a cubic form having a side of 1-15 mm, each having a closed cell or open cell and an average bulk specific gravity of 0.06-0.3 g/cm$^3$ and a bulk specific gravity value larger than the average true specific gravity of the particles.

That is, the hollow fine particles are high in the fluidity because of substantially the spherical form, so that they can be easily arranged into the interior of the tire chamber through an inlet port having a small inner diameter such as a tire valve or the like. On the other hand, if the tire is injured, the hollow fine particles gather in the inner face of the injured portion while blowing out from the injured portion toward the outside of the tire together with the high-pressure gas in the tire chamber. However, the injured path ranging from the inner face of the injured portion toward the outer peripheral face of the tire is not straight, but shows an intricately complicated form, so that the hollow fine particles entered from the injured site at the inner face of the tire are forestalled on the way of the path, and hence many hollow particles are aggregated in the inner face of the injured portion at a compression state to temporarily seal the injured portion. At this moment, the temporary sealing means that the hollow fine particles themselves do not leak out but the gas in the spaces around the particles gradually leaks out.

In this case, the temporary sealing by only the particles may be incomplete depending on the form or size of the injured portion. In the latter case, the level of the sealing can be improved by adding a greater number of the aforementioned foamed bodies as follows.

That is, centrifugal force corresponding to the speed is generated in the tire chamber during the rotation, and hence under such a centrifugal force the foamed bodies having a large bulk specific gravity are unevenly distributed toward the innerliner side of the tire and the hollow fine particles having a small true specific gravity are unevenly distributed toward a side near to the rotation center as compared with the foamed bodies. At this state, even if the injury having a size not sealed with only the particles is caused, since the many foamed bodies are unevenly distributed in the vicinity of the innerliner face at the inner face of the tire, the foamed bodies are immediately closed to inner face of the injured portion while blowing out toward the outside of the tire to thereby seal the injured portion. Therefore, the presence of the foamed bodies is very effective.

Particularly, when the foamed body is a foamed body of a thermoplastic urethane having an open cell, the compressibility is high and the adhesion to the injured portion is easy, and hence the large injury may be complicated and fined by the foamed bodies to change the complicated and fined gas passing path into a form most suitable for sealing with the hollow fine particles, so that it is a very effective means.

Incidentally, the tire-rim assembly according to the invention is preferable to further comprise either an alarm function for dropping the pressure of the tire chamber based on the detection of wheel speed through a wheel speed sensor in an anti-lock brake system or an alarm function for dropping the pressure of the tire chamber based on the system for directly measuring the pressure of the tire chamber through a pressure sensor or both.

That is, when the running is continued at a state of dropping the pressure of the tire chamber due to the puncture, the internal pressure is restored by the aforementioned mechanism in the invention, so that the driver may not find the tire injury according to circumstances. However, since the tire itself is injured by the puncture, as the running is continued, there is a fear of causing the trouble of the tire, which is very risky. Therefore, it is preferable to co-use the aforementioned alarm function for dropping the pressure of the tire chamber.

Further, it is preferable to have a valve for tire for filling the hollow fine particles and the gas. This valve is characterized by providing with a filter capable of damming the hollow fine particles in the tire chamber and passing only the gas toward the outside of the tire chamber. When the punctured tire is repaired by attaching such a valve according to the invention, it is possible to arrange the hollow fine particles into the tire chamber through only one valve, so that a general-purpose rim having only one hole for the valve can be used as it is. In addition, the "leakage of hollow fine particles in a gas filling operation" can be prevented against the natural dropping of the pressure in the tire chamber during the running after the repair, and the maintenance of the pressure in the tire chamber can be realized easily.

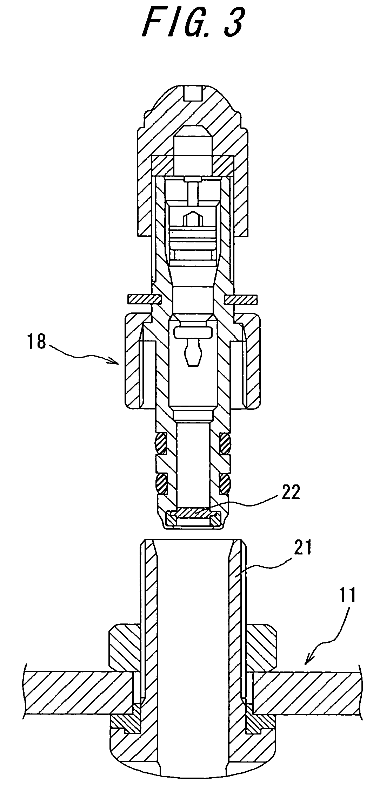

As shown in FIG. 3, such a valve has a structure that a gas supply and discharge valve 18 mounted onto a valve attaching port 21 of a rim 11 is provided with a filter 22 made from, for example, a non-woven fabric.

EXAMPLE 1

Then, there will be explained an example of heat-expandable microspheres according to the invention concretely. Moreover, the invention is not limited to such an example.

With respect to heat-expandable microspheres prepared according to compounding recipe and conditions shown in Tables 1 to 7 and hollow fine particles obtained by heat-expanding such hollow fine microspheres, properties are measured by the following manners and further performances are evaluated. Moreover, the hollow fine particles just after the heat-expansion and the hollow fine particles lapsed with a certain time after the heat-expansion have a difference in air (atmosphere) concentration in the hollow portion, so that there is caused a difference in the internal pressure. In order to solve the difference in the air (atmosphere) concentration in the hollow portion, the penetration of air (atmosphere) into the interiors of the hollow fine particles is promoted by heating the hollow fine particles obtained through the expansion at a temperature higher than the boiling point of the foaming agent but lower than the softening point of the outer shell resin. Concretely, the hollow fine particles obtained by the heat-expansion are heated in a gear type oven set to an inside temperature of 80°C for 48 hours.

[Measurement of average particle size and particle size distribution]

There is used a laser diffraction type particle size distribution measuring device (HEROS & RODOS, made by SYMPATEC Corp.). The measurement is made by a dry measuring method at a dispersion pressure of a dry dispersing unit of 5.0 bar and a vacuum degree of 5.0 mbar to obtain D50 value as an average particle size.

[Measurement of true specific gravity]

A true specific gravity $\rho_p$ of the hollow fine particles is measured by an immersion method (Archimedean method) using isopropyl alcohol at an environment temperature of 25°C in an atmosphere having a relative humidity of 50%.

Concretely, a measuring flask having a capacity of 100 cm$^3$ is made empty and dried and then a weight of the measuring flask ($WB_1$) is weighed. Isopropyl alcohol is accurately filled into the weighed measuring flask up to a meniscus thereof, and thereafter the weight of the measuring flask filled with 100 cm$^3$ of isopropyl alcohol ($WB_2$) is weighed.

Also, the measuring flask having a capacity of 100 cm$^3$ is made empty and dried and then a weight of the measuring flask ($WS_1$) is weighed. About 50 cm$^3$ of heat-expanded hollow fine particles are filled into the weighed measuring flask, and a weight of the measuring flask filled with the heat-expanded hollow fine particles ($WS_2$) is weighed. Then, isopropyl alcohol is accurately filled into the measuring flask filled with the heat-expanded hollow fine particles up to a meniscus without entering bubbles, and thereafter a weight thereof ($WS_3$) is weighed. The thus obtained $WB_1$, $WB_2$, $WS_1$, $WS_2$ and $WS_3$ are introduced into the following equation to calculate a true specific gravity $\rho_p$ of the heat-expanded hollow fine particles.

$$\text{True specific gravity } \rho_p = \{(WS_2\text{-}WS_1)\text{x}(WB_2\text{-}WB_1)/100\}/\{(WB_2\text{-}WB_1)\text{-}(WS_3\text{-}WS_2)\}$$

[Measurement of encapsulation ratio of foaming agent sealed in heat-expandable microspheres]

1.0 g of heat-expandable microspheres are placed in a stainless evaporating dish having a diameter of 80 mm and a depth of 15 mm to measure a mass ($W_1$) thereof. 30 ml of acetonitrile is added and dispersed uniformly and left to stand at room temperature for 3 hours, which is heated at 120°C for 2 hours and dried to measure a mass ($W_2$). The encapsulation ratio of the foaming agent is calculated from the following equation.

$$\text{Encapsulation ratio (mass\%)} = (W_1\text{-}W_2)(g)/1.0(g) \times 100\text{-(water content)(mass\%)}$$

The water content in the above equation is measured using a Carl-Fisher moisture meter (MKA-510N model, made by Kyoto Denshi Kogyo Co., Ltd.).

[Measurement of expansion starting temperature (Ts1) of heat-expandable microspheres]

0.5 mg of heat-expandable microspheres are placed in an aluminum cup having a diameter of 6.0 mm (inner diameter: 5.65 mm) and a depth of 4.8 mm and an aluminum cover having a diameter of 5.6 mm and a thickness of 0.1 mm is placed on an upper part of the microsphere layer to prepare a sample. Then, a sample height ($H_1$) at a state of applying a force of 0.01 N to the sample through a press bar is measured using DMA (DMA Q800 type, made by TA Instruments). At the state of applying the force of 0.01 N through the press bar, the sample is heated from 20°C to 300°C at a temperature rising rate of 10°C/min to measure a displacement quantity of the press bar in a vertical direction. A displacement starting temperature in a positive direction is an expansion starting temperature (Ts1).

[Measurement of expansion starting temperature (Ts2) of hollow fine particles]

0.5 mg of hollow fine particles are placed in an aluminum cup having a diameter of 6.0 mm (inner diameter: 5.65 mm) and a depth of 4.8 mm and an aluminum cover having a diameter of 5.6 mm and a thickness of 0.1 mm is placed on an upper part of the hollow fine particle layer to prepare a sample. Then, a sample height ($H_1$) at a state of applying a force of 0.01 N to the sample through a press bar is measured using DMA (DMA Q800 type, made by TA Instruments). At the state of applying the force of 0.01 N through the press bar, the sample is heated from 20°C to 300°C at a temperature rising rate of 10°C/min to measure a displacement quantity of the press bar in a vertical direction. A displacement starting temperature in a positive direction is an expansion starting temperature (Ts2).

Moreover, the method of increasing the internal pressure in the hollow fine particles and the method of calculating the compression recovering ratio are as mentioned above.

The production procedure will be concretely described every Invention Example below.

[Invention Example 1]

To 200 parts by mass of a deionized water were added 23 parts by mass of sodium chloride, 10 parts by mass of colloidal silica (effective component content: 20%), 0.1 part by mass of polyvinylpyrrolidone and 0.01 part by mass of sodium nitrite, which were adjusted to a pH of 2.4 and uniformly mixed to obtain an aqueous dispersing medium.

An oily mixture was prepared according to a compounding recipe shown in Table 1. As to an amount of an initiator added in the table is described a pure content value.

Namely, the aqueous dispersing medium and the oily mixture were mixed and the resulting mixed solution was dispersed in a dispersing machine provided with a pressure vessel (trade name: CLEARMIX CLM-0.8S, made by M-Technique Co., Ltd.) at an interval between rotor and screen of 0.5 mm, number of blades in rotor of 4, a lead angle of $0\,\pi$ radian, a slit number in screen of 24, a slit width of 2 mm and a rotor revolution number of 16000 rpm for 180 seconds to obtain a suspension. The suspension was transferred to a reaction vessel, which was purged with nitrogen and rendered into an initial reaction pressure of 0.5 MPa to conduct polymerization at a polymerization temperature shown in Table 1 for 20 hours. After the polymerization, a polymer product was filtered and dried. With respect to the resulting heat-expandable microspheres, the average particle size, variation coefficient of particle size distribution CV, encapsulation ratio and expansion starting temperature Ts1 were measured. The results are shown in Table 1.

Then, the resulting heat-expandable microspheres were heat-expanded in a production apparatus provided with the foaming step part shown in FIG. 1, in which an inner diameter at a downstream side of a hot air nozzle was 60 mmϕ and outer and inner diameters at downstream side of an overheat preventing cylinder 3 are 40 mmϕ and 25 mmϕ, respectively, and outer and inner diameters at downstream side of a dispersing nozzle 4 were 20 mmϕ and 15 mmϕ,

respectively, to produce hollow fine particles.

A feed rate of the starting material was set to 3.0 kg/h. As to a gas fluid 6, a flow rate was adjusted to 0.5-5.0 1/min in the apparatus used in this example through it was enough to collide the heat-expandable microspheres as a starting material onto a collision plate 5 to uniformly disperse into a hot air stream 8.

As to a gas fluid 7, it was adjusted to 5-180 1/min in the apparatus used in this example through it was enough to improve the dispersibility of the heat-expandable microspheres and prevent overheating of a gas inlet pipe and collision plate.

As to the hot air stream 8, it was adjusted to 1.0-2.0 m3/min in the apparatus used in this example though it was enough to uniformly heat-expand the heat-expandable microspheres.

The temperature of the hot air was adjusted so that the average true specific gravity of hollow fine particles obtained by the heat-expansion was $0.030 \pm 0.003$ g/cm$^3$. The foaming conditions delicately changed in accordance with the scale of the apparatus, feed rate of the starting material, target expansion degree and the like, so that they were controlled so as to target that the true specific gravity of the resulting hollow fine particles was within the above range even in the following invention examples.

With respect to the resulting hollow fine particles, the average particle size, variation coefficient of particle size distribution CV, encapsulation ratio, expansion starting temperature Ts2, compression recovering ratio after treatment of stabilizing internal pressure to atmospheric pressure and compression recovering ratio after treatment of increasing internal pressure were measured. The results are shown in Table 1.

[Invention Examples 2-7, Comparative Examples 1 and 2]

The same procedure as in Invention Example 1 was conducted except that the composition of the oily mixture and reaction conditions in Invention Example 1 were changed as shown in Table 1 to obtain results shown in Table 1.

Table 1

| | | Invention Example 1 | Example 2* | Invention Example 3 | Invention Example 4 | Invention Example 5 | Invention Example 6 | Invention Example 7 | Comparative Example 1 | Comparative Example 2 |
|---|---|---|---|---|---|---|---|---|---|---|
| Monomer component | AN (part by mass) | 30 | 30 | 30 | 30 | 30 | 30 | 30 | 30 | 30 |
| | MAN (part by mass) | 25 | 25 | 25 | 25 | 25 | 25 | 25 | 25 | 25 |
| | MAA (part by mass) | 45 | 45 | 45 | 45 | 45 | 45 | 45 | 45 | 45 |
| | Crosslinking agent A (part by mass) | 0.5 | 0.5 | 0.5 | 0.5 | 0.5 | 0.5 | 0.5 | 0.5 | 0.5 |
| Foaming agent | Foaming agent A (part by mass) | 40 | 40 | 40 | 40 | 40 | 40 | 40 | 40 | 40 |
| Polymerization initiator | Polymerization initiator A (part by mass) | 2.3 | - | - | - | - | - | - | - | - |
| | Polymerization initiator B (part hv mass) | - | 1.3 | - | - | - | - | - | - | - |
| | Polymerization initiator C (part by mass) | - | - | 2.5 | - | - | - | - | - | - |
| | Polymerization initiator D (part by mass) | - | - | - | 1.5 | 2.0 | 2.5 | 6.0 | - | - |
| | Polymerization initiator E (part by mass) | - | - | - | - | - | - | - | 1.3 | - |
| | Polymerization initiator F (part bv mass) | - | - | - | - | - | - | - | - | 1.0 |
| Polymerization temperature (°C) | | 50 | 50 | 50 | 50 | 50 | 50 | 40 | 60 | 70 |
| Thermal expandable micro-balloons | Average particle size (μm) | 26 | 26 | 28 | 27 | 30 | 29 | 28 | 27 | 29 |
| | Variation coefficient CV (%) | 25 | 24 | 23 | 25 | 24 | 26 | 24 | 27 | 27 |
| | Inclusion ratio (mass%) | 27 | 28 | 28 | 27 | 28 | 28 | 27 | 28 | 27 |
| | Expansion starting temperature Ts1 (°C) | 172 | 172 | 170 | 171 | 173 | 172 | 171 | 172 | 174 |

EP 1 952 880 B1

| | | Invention Example 1 | Example 2* | Invention Example 3 | Invention Example 4 | Invention Example 5 | Invention Example 6 | Invention Example 7 | Comparative Example 1 | Comparative Example 2 |
|---|---|---|---|---|---|---|---|---|---|---|
| Hollow fine particles | Kind | A1 | A2 | A3 | A4 | A5 | A6 | A7 | A8 | A9 |
| | Average particle size ($\mu$m) | 91 | 91 | 98 | 94 | 105 | 101 | 97 | 94 | 102 |
| | Variation coefficient CV (%) | 25 | 24 | 24 | 25 | 24 | 26 | 24 | 27 | 26 |
| | Inclusion ratio (mass%) | 26 | 26 | 27 | 27 | 28 | 28 | 27 | 26 | 27 |
| | Expansion starting temperature Ts2 (°C) | 151 | 150 | 151 | 152 | 151 | 150 | 152 | 150 | 150 |
| | Average true specific [3] gravity (g/cm$^3$) | 0.031 | 0.031 | 0.030 | 0.031 | 0.030 | 0.031 | 0.030 | 0.031 | 0.030 |
| | Compression recovering ratio after treatment of stabilizing internal pressure to atmospheric pressure (%) | 85 | 86 | 83 | 93 | 92 | 89 | 88 | 83 | 78 |
| | Compression recovering ratio after treatment of increasing internal pressure (%) | 83 | 81 | 89 | 92 | 92 | 85 | 82 | 73 | 65 |

* not according to the invention
(Note) AN: acrylonitrile
MAN: methacrylonitrile
MAA: methacrylic acid
Crosslinking agent A: 1,6-hexanediol diacrylate
Foaming agent A: methyl perfluoropropyl ether
Initiator A: di-2-ethoxyethyl peroxydicarbonate (Perloyl OPP, purity: 70%)
Initiator B: diisopropyl peroxydicarbonate (Perloyl IPP, purity: 50%)
Initiator C: bis(4-t-butylcyclohexyl) peroxydicarbonate (Perloyl TCP, puiry: 90%)
Initiator D: di-sec-butyl peroxydicarbonate (Lupazol 225, purity: 50%)
Initiator E: t-hexyl peroxypivarate (Perhexyl PV, purity: 70%)
Initiator F: 2,2'-azobisisobutyronitrile

[Invention Examples 8-14]

The same procedure as in Invention Example 1 was conducted except that the composition of the oily mixture and reaction conditions in Invention Example 1 were changed as shown in Table 2 to obtain results shown in Table 2.

[Table 2]

| | | Invention Example 8 | Invention Example 9 | Example 10 * | Invention Example 11 | Invention Example 12 | Invention Example 13 | Invention Example 14 |
|---|---|---|---|---|---|---|---|---|
| Monomer component | AN (part by mass) | 30 | 30 | 30 | 30 | 30 | 30 | 30 |
| | MAN (part by mass) | 25 | 25 | 25 | 25 | 25 | 25 | 25 |
| | MAA (part by mass) | 45 | 45 | 45 | 45 | 45 | 45 | 45 |
| | Crosslinking agent A (part by mass) | 0.5 | - | - | - | - | - | - |
| | Crosslinking agent B (part by mass) | - | 0.5 | - | - | - | - | - |
| | Crosslinking agent C (part bv mass) | - | - | 0.5 | - | - | - | - |
| | Crosslinking agent D (part by mass) | - | - | - | 0.2 | 0.5 | 1.0 | 3.0 |
| Foaming agent | Foaming agent A (part by mass) | 40 | 40 | 40 | 40 | 40 | 40 | 40 |
| Polymerization initiator | Polymerization initiator D (part bv mass) | 2.0 | 2.0 | 2.0 | 2.0 | 2.0 | 2.0 | 2.0 |
| Heat-expandable | Average particle size ($\mu$m) | 28 | 31 | 30 | 30 | 29 | 28 | 29 |
| | Variation coefficient CV (%) | 23 | 24 | 25 | 25 | 25 | 24 | 25 |
| | Encapsulation ratio (mass%) | 27 | 27 | 26 | 26 | 27 | 26 | 26 |
| | Expansion starting temperature Ts1 (°C) | 171 | 171 | 172 | 171 | 172 | 172 | 173 |

EP 1 952 880 B1

28

(continued)

| Hollow fine particles | Kind | A10 | A11 | A12 | A13 | A14 | A15 | A16 |
|---|---|---|---|---|---|---|---|---|
| | | Invention Example 8 | Invention Example 9 | Example 10 * | Invention Example 11 | Invention Example 12 | Invention Example 13 | Invention Example 14 |
| | Average particle size ($\mu$m) | 91 | 98 | 98 | 94 | 105 | 101 | 101 |
| | Variation coefficient CV (%) | 24 | 24 | 25 | 25 | 24 | 26 | 26 |
| | Encapsulation ratio (mass%) | 26 | 27 | 26 | 27 | 28 | 28 | 28 |
| | Expansion starting temperature Ts2 (°C) | 150 | 151 | 152 | 152 | 151 | 150 | 150 |
| | Average true specific gravity (g/cm$^3$) | 0.031 | 0.030 | 0.033 | 0.031 | 0.030 | 0.031 | 0.031 |
| | Compression recovering ratio after treatment of stabilizing internal pressure to atmospheric pressure (%) | 83 | 86 | 86 | 92 | 89 | 91 | 88 |
| | Compression recovering ratio after treatment of increasing internal pressure (%) | 86 | 83 | 81 | 88 | 92 | 85 | 85 |

* not according to the invention
(Note) AN: acrylonitrile
MAN: methacrylonitrile
MAA: methacrylic acid
Crosslinking agent A: 1,6-hexanediol diacrylate
Crosslinking agent B: trimethylolpropane trimethacrylate
Crosslinking agent C: erthyleneglycol dimethacrylate
Crosslinking agent D: 1,9-nonanediol diacrylate
Foaming agent A: methyl perfluoropropyl ether
Initiator D: di-sec-butyl peroxydicarbonate (Lupazol 225, purity: 50%)

[Invention Examples 15-19]

The same procedure as in Invention Example 1 was conducted except that the composition of the oily mixture and reaction conditions in Invention Example 1 were changed as shown in Table 3 to obtain results shown in Table 3.

[Table 3]

| | | Invention Example 15 | Invention Example 16 | Invention Example 17 | Invention Example 18 | Invention Example 19 |
|---|---|---|---|---|---|---|
| Monomer component | AN (part by mass) | 47 | 41 | 36 | 26 | 19 |
| | MAN (part by mass) | 38 | 34 | 29 | 20 | 16 |
| | MAA (part by mass) | 15 | 25 | 35 | 55 | 65 |
| | Crosslinking agent D (part by mass) | 0.5 | 0.5 | 0.5 | 0.5 | 0.5 |
| Foaming agent | Foaming agent A (part by mass) | 40 | 40 | 40 | 40 | 40 |
| Polymerization initiator | Polymerization initiator D (part by mass) | 2.0 | 2.0 | 2.0 | 2.0 | 2.0 |
| Heat-expandable microspheres | Average particle size ($\mu$m) | 28 | 28 | 28 | 28 | 27 |
| | Variation coefficient CV (%) | 23 | 25 | 24 | 26 | 25 |
| | Encapsulation ratio (mass%) | 27 | 27 | 28 | 27 | 27 |
| | Expansion starting temperature Ts1 (°C) | 135 | 147 | 160 | 182 | 191A17 |

(continued)

| | | Invention Example 15 | Invention Example 16 | Invention Example 17 | Invention Example 18 | Invention Example 19 |
|---|---|---|---|---|---|---|
| Hollow fine particles | Kind | A17 | A18 | A19 | A20 | A21 |
| | Average particle size ($\mu$m) | 96 | 98 | 99 | 98 | 94 |
| | Variation coefficient CV (%) | 23 | 24 | 25 | 25 | 26 |
| | Encapsulation ratio (mass%) | 26 | 26 | 27 | 27 | 26 |
| | Expansion starting temperature Ts2 (°C) | 112 | 127 | 142 | 160 | 171 |
| | Average true specific gravity (g/cm$^3$) | 0.031 | 0.030 | 0.029 | 0.030 | 0.031 |
| | Compression recovering ratio after treatment of stabilizing internal pressure to atmospheric pressure (%) | 89 | 89 | 87 | 86 | 83 |
| | Compression recovering ratio after treatment of increasing internal pressure (%) | 92 | 89 | 87 | 86 | 83 |

(Note) AN: acrylonitrile
MAN: methacrylonitrile
MAA: methacrylic acid
Crosslinking agent A: 1,6-hexanediol diacrylate
Crosslinking agent B: trimethylolpropane trimethacrylate
Crosslinking agent C: erthyleneglycol dimethacrylate
Crosslinking agent D: 1,9-nonanediol diacrylate
Foaming agent A: methyl perfluoropropyl ether
Initiator D: di-sec-butyl peroxydicarbonate (Lupazol 225, purity: 50%)

[Invention Examples 20-26]

The same procedure as in Invention Example 1 was conducted except that the composition of the oily mixture and reaction conditions in Invention Example 1 were changed as shown in Table 4 to obtain results shown in Table 4.

[Table 4]

| | | Example 20 * | Invention Example 21 | Invention Example 22 | Invention Example 23 | Example 24 * | Example 25 * | Example 26 * |
|---|---|---|---|---|---|---|---|---|
| Monomer component | AN (part by mass) | 30 | 30 | 30 | 30 | 30 | 30 | 30 |
| | MAN (part by mass) | 25 | 25 | 25 | 25 | 25 | 25 | 25 |
| | MAA (part by mass) | 45 | 45 | 45 | 45 | 45 | 45 | 45 |
| | Crosslinking agent D (part by mass) | 0.5 | 0.5 | 0.5 | 0.5 | 0.5 | 0.5 | 0.5 |
| Foaming agent | Foaming agent A (part by mass) | 20 | 35 | 60 | 90 | 120 | - | - |
| | Foaming agent B (part by mass) | - | - | - | - | - | 60 | - |
| | Foaming agent C (part by mass) | - | - | - | - | - | - | 60 |
| Polymerization initiator | Polymerization initiator D (part by mass) | 2.0 | 2.0 | 2.0 | 2.0 | 2.0 | 2.0 | 2.0 |
| Heat-expandable microspheres | Average particle size ($\mu$m) | 28 | 27 | 29 | 28 | 28 | 28 | 29 |
| | Variation coefficient CV (%) | 25 | 28 | 27 | 27 | 25 | 27 | 26 |
| | Encapsulation ratio (mass%) | 15 | 24 | 35 | 44 | 53 | 34 | 36 |
| | Expansion starting temperature Ts1 (°C) | 173 | 171 | 170 | 168 | 165 | 183 | 198 |

| | | Example 20 * | Invention Example 21 | Invention Example 22 | Invention Example 23 | Example 24 * | Example 25 * | Example 26 * |
|---|---|---|---|---|---|---|---|---|
| Hollow fine particles | Kind | A22 | A23 | A24 | A25 | A26 | A27 | A28 |
| | Average particle size ($\mu$m) | 96 | 92 | 101 | 98 | 100 | 96 | 101 |
| | Variation coefficient CV (%) | 24 | 26 | 26 | 25 | 24 | 26 | 25 |
| | Encapsulation ratio (mass%) | 15 | 23 | 35 | 44 | 53 | 34 | 36 |
| | Expansion starting temperature Ts2 (°C) | 153 | 151 | 150 | 152 | 151 | 150 | 153 |
| | Average true specific gravity (g/cm3) | 0.032 | 0.032 | 0.030 | 0.030 | 0.029 | 0.032 | 0.031 |
| | Compression recovering ratio after treatment of stabilizing internal pressure to atmospheric pressure (%) | 85 | 88 | 93 | 89 | 88 | 76 | 72 |
| | Compression recovering ratio after treatment of increasing internal pressure (%) | 76 | 83 | 89 | 83 | 77 | 78 | 76 |

* not according to the invention
(Note) AN: acrylonitrile
MAN: methacrylonitrile
MAA: methacrylic acid
Crosslinking agent A: 1,6-hexanediol diacrylate
Crosslinking agent B: trimethylolpropane trimethacrylate
Crosslinking agent C: erthyleneglycol dimethacrylate
Crosslinking agent D: 1,9-nonanediol diacrylate
Foaming agent A: methyl perfluoropropyl ether
Initiator D: di-sec-butyl peroxydicarbonate (Lupazol 225, purity: 50%)

EP 1 952 880 B1

[Invention Examples 27-31]

The same procedure as in Invention Example 1 was conducted except that the composition of the oily mixture and reaction conditions in Invention Example 1 were changed as shown in Table 5 to obtain results shown in Table 5.

[Table 5]

|  |  | Invention Example 27 | Invention Example 28 | Invention Example 29 | Invention Example 30 | Example 31 * |
|---|---|---|---|---|---|---|
| Monomer component | AN (part by mass) | 30 | 30 | 30 | 30 | 30 |
| | MAN (part by mass) | 25 | 25 | 25 | 25 | 25 |
| | MAA (part by mass) | 45 | 45 | 45 | 45 | 45 |
| | Crosslinking agent D (part by mass) | 0.5 | 0.5 | 0.5 | 0.5 | 0.5 |
| Foaming agent | Foaming agent A (part bv mass) | 40 | 40 | 40 | 40 | 40 |
| Polymerization initiator | Polymerization initiator D (part by mass) | 2.0 | 2.0 | 2.0 | 2.0 | 2.0 |
| Revolution number | of rotor (rpm) | 19000 | 17000 | 16000 | 15000 | 14000 |
| Heat-expandable microspheres | Average particle size ($\mu$m) | 15 | 21 | 31 | 39 | 47 |
| | Variation coefficient CV (%) | 25 | 24 | 23 | 25 | 26 |
| | Encapsulation ratio (mass%) | 25 | 27 | 27 | 26 | 27 |
| | Expansion starting temperature Ts1 (°C) | 171 | 172 | 170 | 170 | 171 |

(continued)

| | | Invention Example 27 | Invention Example 28 | Invention Example 29 | Invention Example 30 | Example 31 * |
|---|---|---|---|---|---|---|
| Hollow fine particles | Kind | A29 | A30 | A31 | A32 | A33 |
| | Average particle size ($\mu$m) | 52 | 71 | 109 | 135 | 163 |
| | Variation coefficient CV (%) | 24 | 24 | 23 | 26 | 26 |
| | Encapsulation ratio (mass%) | 24 | 27 | 26 | 26 | 25 |
| | Expansion starting temperature Ts2 (°C) | 151 | 153 | 151 | 151 | 153 |
| | Average true specific gravity (g/cm$^3$) | 0.032 | 0.033 | 0.030 | 0.031 | 0.031 |
| | Compression recovering ratio fter treatment of stabilizing internal pressure to atmospheric pressure (%) | 85 | 85 | 87 | 85 | 87 |
| | Compression recovering ratio after treatment of increasing internal pressure (%) | 80 | 89 | 92 | 84 | 77 |

* not according to the invention
(Note) AN: acrylonitrile
MAN: methacrylonitrile
MAA: methacrylic acid
Crosslinking agent A: 1,6-hexanediol diacrylate
Crosslinking agent B: trimethylolpropane trimethacrylate
Crosslinking agent C: erthyleneglycol dimethacrylate
Crosslinking agent D: 1,9-nonanediol diacrylate
Foaming agent A: methyl perfluoropropyl ether
Initiator D: di-sec-butyl peroxydicarbonate (Lupazol 225, purity: 50%)
Clearmix: CLEARMIX CLM-0.8S (made by M-Technique Co., Ltd.)

[Invention Examples 32-34]

Heat-expandable microspheres A were produced by using the heat-expandable microspheres obtained in Invention Example 29 as a starting material and heat-expanding in a production apparatus provided with the foaming step part shown in FIG. 1. The hot air temperature was adjusted so that the true specific gravity of hollow fine particles obtained by the heat-expansion was 0.015±0.003 g/cm$^3$ in Invention Example 32, 0.045±0.003 g/cm$^3$ in Invention Example 33 and 0.060±0.003 g/cm$^3$ in Invention Example 34. With respect to the resulting hollow fine particles, the average particle size, variation coefficient of particle size distribution CV, encapsulation ratio, expansion starting temperature Ts2, compression recovering ratio after treatment of stabilizing internal pressure to atmospheric pressure and compression recovering ratio after treatment of increasing internal pressure were measured. The results are shown in Table 6.

[Table 6]

|  | | Example 32 * | Invention Example 33 | Invention Example 34 |
|---|---|---|---|---|
| Hollow fine particles | Kind | A34 | A35 | A36 |
| | Average particle size ($\mu$m) | 125 | 91 | 82 |
| | Variation coefficient CV (%) | 24 | 23 | 23 |
| | Encapsulation ratio (mass%) | 24 | 26 | 26 |
| | Expansion starting temperature Ts2 (°C) | 152 | 152 | 151 |
| | Average true specific gravity (g/cm$^3$) | 0.018 | 0.047 | 0.063 |
| | Compression recovering ratio after treatment of stabilizing internal pressure to atmospheric pressure (%) | 82 | 91 | 87 |
| | Compression recovering ratio after treatment of increasing internal pressure (%) | 78 | 92 | 91 |
| * not according to the invention | | | | |

[Invention Examples C1-C8]

Heat-expandable microspheres obtained in Invention Example 12 were used as a starting material and a coating agent was adhered to surfaces of hollow fine particles according to kind and amount of coating agent for invention example in Table 7 using a SV mixer (capacity: 50 L, made by Shinko Kankyo Solution Co., Ltd.). The coating way was carried out for 6 hours by charging 20 kg of the heat-expandable microspheres as a starting material and the coating agent according to the kind of the coating agent and the amount of the coating agent described in the invention example of Table 7 into a main body of the SV mixer and setting a jacket temperature to 50°C, an orbital screw to 3.0 rpm and a rotating screw to 100 rpm.

Hollow fine particles were produced by using the thus surface-coated heat-expandable microspheres as a starting material and heat-expanding in a production apparatus provided with a foaming step part shown in FIG. 1. The hot air temperature was adjusted likewise Invention Example 12. With respect to the resulting hollow fine particles, the average particle size, variation coefficient of particle size distribution CV, encapsulation ratio, expansion starting temperature Ts2, compression recovering ratio after treatment of stabilizing internal pressure to atmospheric pressure and compression recovering ratio after treatment of increasing internal pressure were measured. The results are shown in Table 7.

[Table 7]

| | | Invention Example C1 | Invention Example C2 | Invention Example C3 | Invention Example C4 | Invention Example C5 | Invention Example C6 | Invention Example C7 | Invention Example C8 |
|---|---|---|---|---|---|---|---|---|---|
| Kind of coating agent | | Ca salt of stearic acid | Mg salt of stearic acid | Zn salt of stearic acid | Li salt of stearic acid | Li salt of stearic acid | Li salt of stearic acid | carbon black | UF-G |
| Amount of coating agent (mass%) | | 10 | 10 | 10 | 5 | 10 | 20 | 10 | 10 |
| Coating method | | SV mixer | SV mixer | SV mixer | SV mixer | SV mixer | SV mixer | SV mixer | SV mixer |
| Hollow fine particles | Kind | C1 | C2 | C3 | C4 | C5 | C6 | C7 | C8 |
| | Average particle size (μm) | 102 | 103 | 101 | 102 | 101 | 102 | 101 | 101 |
| | Variation coefficient CV (%) | 25 | 25 | 25 | 25 | 24 | 25 | 24 | 24 |
| | Encapsulation ratio (mass%) | 23 | 23 | 24 | 25 | 23 | 21 | 25 | 25 |
| | Expansion starting temperature Ts2 (°C) | 152 | 152 | 151 | 155 | 153 | 155 | 153 | 152 |
| | Average true specific gravity (g/cm3) | 0.033 | 0.032 | 0.033 | 0.031 | 0.033 | 0.036 | 0.033 | 0.033 |
| | Compression recovering ratio after treatment of stabilizing internal pressure to atmospheric pressure (%) | 87 | 89 | 89 | 87 | 89 | 87 | 87 | 88 |
| | Compression recovering ratio after treatment of increasing internal pressure (%) | 88 | 86 | 87 | 89 | 91 | 88 | 90 | 90 |

(Note) SV mixer: SV Mixer 50L (made by Shinko Kankyo Solution Co., Ltd.)
Carbon black: Carbon ECP600JD (conductive carbon, made by Lion Corp.)
UFG: UF-G5 (artificial graphite fine powder, made by Showa Denko Co., Ltd.)

EXAMPLE 2

There are provided tire-rim assemblies by assembling a tire for passenger car having a size shown in Tables 8-14 onto a rim having a size shown in Tables 8-14. In this case, the tire is according to a general structure corresponding to the kind and size of such a tire. Then, a vehicle corresponding to such a tire size is selected and a load corresponding to four crews is applied thereto, and a pressure of tire chamber is adjusted to 200 kPa by filling a high-pressure air and also the above tire-rim assembly is mounted onto a front wheel of a left side. The axle weight is 5.13 KN. At this moment, the pressure of the tire chamber is gradually removed while keeping the state under loading to measure such a value of pressure in the tire chamber that the side portion of the tire contacts with ground or innerliner faces contact with each other as shown in the tables. The latter value of the pressure in the tire chamber is defined as "internal pressure value for RF running limit".

Then, the pressure of the tire chamber in each tire is adjusted to 200 kPa as an internal pressure used at a no-loading state, and then the high-pressure air is discharged from the tire chamber to determine a discharge amount of the gas, from which a volume of each tire chamber is calculated. The calculated results are shown in each table.

In this case, the measurement of the chamber volume in the tire-rim assembly is carried out by the following procedures.

[Method of measuring tire chamber volume]

Procedure 1: The tire-rim assembly is adjusted to a given internal pressure (internal pressure used) $P_2$ by filling air of room temperature while keeping the non-loading state. In this case, an objective tire chamber volume under $P_2$ is $V_2$.

Procedure 2: Air in the tire chamber is flowed into an integrating flowmeter by opening a tire valve to atmospheric pressure $P_1$ to measure a discharge quantity of filled air $V_1$. Moreover, as the integrating flowmeter is used DC DRY gas meter DC-2C, inteligent counter SSF, made by Shinagawa Seiki Co., Ltd.

The tire chamber volume V2 at the internal pressure used P2 can be determined by using the above measured values according to the following equation:

$$\text{Value of tire chamber volume} = (\text{discharge quantity of filled air})/(\text{internal pressure used/atmospheric pressure}) \ldots \text{(II)}$$

Moreover, the internal pressure used in the equation (II) uses a gauge pressure value (kPa), and the atmospheric pressure value uses an absolute value in an air gauge (kPa).

Moreover, the kind of hollow fine particles in each table is as shown in Tables 1-7. The hollow fine particles shown in these tables are weighed into a vessel having a known volume and arranged in each tire chamber at a filling ratio shown in the table supposing the above tire chamber volume.

Then, the internal pressure is adjusted to 200 kPa by filling nitrogen into the tire-rim assembly. On previous examination of behavior of restoring particle volume by the following examination method, a keeping time corresponding to a target pressure of hollow portion is calculated, and then the pressure of the tire chamber is kept in a warming chamber kept at 45°C to increase the pressure of hollow portion in the hollow fine particles, whereby a desired tire-rim assembly is prepared while restoring the particle volume.

At this moment, the method of calculating the keeping time suitable for increasing the pressure of the hollow portion in the hollow fine particles is as follows.

Firstly, there is provided a cylindrical pressure vessel of a transparent acrylic resin having a volume of about 1000 cm$^3$ and a constant inner diameter, and then the hollow fine particles according to the invention are fully filled into the vessel while applying oscillations to the vessel in an ultrasonic water bath or the like. Thereafter, a gas to be filled in the tire chamber is filled into the vessel up to a desirable pressure used such as internal pressure designated in a vehicle or the like. As the pressure ins increased, the volume of the particles in the vessel is reduced, so that a height of a portion filled with the hollow fine particles inside the vessel (hereinafter referred to as a hollow fine particle height) lowers. At a time of arriving the pressure inside the vessel at a target pressure value, oscillations are applied to the vessel in the ultrasonic water bath or the like for 5 minutes, and then the vessel is left to stand for 5 minutes. The hollow fine particle height in the vessel is measured at a time that the hollow fine particle height becomes stable, which is "hollow fine particle height at a start of pressurization: H1". Further, the application of the above pressure used is continued to measure "hollow fine particle height with the lapse of a certain time: Hx".

Then, the hollow fine particle height is measured every a certain time while applying the above pressure to record changes with the lapse of time, and the measurement is continued until the hollow fine particle height is not changed, whereby "finally stabilized hollow fine particle height: H2" is measured. From the above values, a recovering ratio of particle volume is calculated by the following equation:

$$\text{Recovering ratio of particle volume} = [(Hx\text{-}H1)/(H2\text{-}H1)] \times 100$$

Based on the above measured results is examined a time until a target volume recovering ratio is obtained, from which it has been confirmed that all of the hollow fine particles are sufficiently recovered for the keeping time of 10 days. From the above, the keeping time in the table is 10 days, during which the pressure of the hollow portion in the hollow fine particles is increased in the tire chamber.

Further, a ratio of pressure inside hollow portions of the hollow fine particles arranged in the tire chamber is measured and confirmed as follows.

[Method of confirming pressure level in hollow portion]

There is provided an objective tire in which hollow fine particles are arranged in a tire chamber and kept at a desirable internal pressure used $P_2$ for a certain time. By disposing a filter in a vale is obtained a state that only a high-pressure gas is discharged while retaining the hollow fine particles in the tire chamber when the valve is opened. Thereafter, once the pressure of the tire chamber is rendered into atmospheric pressure, a pressure $P_{50\%}$ corresponding to 50% of $P_2$ is adjusted by again filling the gas, and then the tire valve is opened to flow air in the tire chamber into an integrating flowmeter while discharging to atmospheric pressure $P_1$, whereby an air discharge quantity $V_{50\%}$ is measured. Then, a volume value of spaces around particles V under a pressure $P_{50\%}$ is determined by the following equation:

$$\text{Volume value of spaces around particles V (cm}^3) \text{ under } P_{50\%} = [\text{value of air discharge quantity } V_{50\%} \text{ (cm}^3)]/[\text{value of internal pressure } P_{50\%} \text{ (kPa)/atmospheric pressure } P_1 \text{ (kPa)]}$$

Similarly, the volume of spaces around particles is calculated at each pressure level of $P_{30\%}$, $P_{70\%}$, $P_{80\%}$, $P_{90\%}$ and the like. If the pressure of the hollow portion is not the pressure of the tire chamber, the volume of the hollow fine particles reduces, and hence the volume of spaces around particles becomes at an increased state. Therefore, the above measurement is started from a sufficiently low pressure level, in which a pressure level starting the increase in the volume of spaces around particles is defined as a pressure level of hollow pressure in hollow fine particles. The pressure level of hollow portion in the tire of the table is 200 kPa.

After the above method of confirming the pressure level of hollow portion is conducted, when a pressure of the tire chamber is an internal pressure used ($P_{100\%}$) by the same way, the volume value of spaces around particles V is determined by the following equation:

$$\text{Volume value of spaces around particles V (cm}^3) \text{ under } P_{100\%} = [\text{value of air discharge quantity } V_{100\%} \text{ (cm}^3)]/[\text{value of internal pressure } P_{100\%} \text{ (kPa)/atmospheric pressure } P_1 \text{ (kPa)]}$$

Then, a difference between the above tire chamber volume and the volume value of spaces around particles V is determined to obtain a hollow fine particle volume in the tire chamber under an internal pressure used.

A drum test for high-speed heat generation is carried out by using the thus obtained tire-rim assembly.

That is, the above evaluation assembly adjusted to an internal pressure of 200 kPa is mounted onto a drum testing machine set to a test environmental temperature of 38°C, and the running is started at a speed of 100 km/h while applying a load of 5.13 KN, and then a speed is increased by 10 km/h every 5 minutes to measure a temperature of particles in the tire chamber and a change of pressure in the tire chamber. Moreover, a pressure sensor monitoring the pressure of the tire chamber is disposed in an inner face of the rim to be evaluated, while a thermocouple measuring the temperature of the hollow fine particles is disposed on a central portion of an inner face of the innerliner in the widthwise direction, and signals of the measured pressure data and temperature data are transmitted through a usually used telemeter to receive by a receiver disposed in a testing chamber, whereby changes of the pressure in the tire chamber and the temperature in the hollow fine particles are measured. In this test, a speed obtained by adding 10 km/h to a guarantee speed according to a speed mark of each tire is evaluated as "upper limit speed". That is, when the temperature of the hollow fine particles arrives at Ts2 of a re-expansion starting temperature of the hollow fine particles before the arrival of the above upper limit speed, the running is stopped at a speed in this time. Also, when the temperature of the hollow fine particles does not arrive at Ts2 of the re-expansion starting temperature of the hollow fine particles even under the upper limit speed, the running is stopped at the upper limit speed. As a result, a case that the speed at a time of judging the running stop is equal to or more than the guarantee speed according to the speed mark of each tire is judged as acceptable.

After the tire after the running is left and cooled to room temperature, the pressure of the tire chamber is adjusted to the internal pressure used, and then the volume value of spaces around particles after the running is measured by the aforementioned method. Further, a difference between the above tire chamber volume and the volume value of spaces around particles after the running is calculated to obtain a hollow fine particle volume after the running.

Finally, "ratio of keeping hollow fine particle volume" as an indication for high-speed durability of hollow fine particles is calculated by the following equation to obtain a result shown in the table. The "ratio of keeping hollow fine particle volume" is excellent as it is near to 100%, the value of not less than 95% is judged as acceptable.

$$\text{"Ratio of keeping hollow fine particle volume"} = (\text{hollow fine particle volume after running/hollow fine particle volume before running}) \times 100$$

Also, the pressure of the tire chamber in the tire-rim assembly for another evaluation is adjusted to an internal pressure of 200 kPa and then the long running is conducted on a drum at a speed of 90 km/h over a distance of 50000 km while applying a load of 5.13 kN to provide a history through running.

Moreover, the hollow fin particle volume after the running is measured in the same method as in the above drum test for high-speed heat generation and a "ratio of keeping hollow fine particle volume" as an indication for a long-run durability of hollow fine particles is calculated to obtain a result shown in the table. The "ratio of keeping hollow fine particle volume" is excellent as it is near to 100%, the value of not less than 75% is judged as acceptable.

Thereafter, each tire having the running history by the above long-run drum is mounted onto a left front wheel of the above-selected vehicle, which is set to a load capacity corresponding to four crews. Next, four nails each having a diameter of 5.0 mm and a length of 50 mm are inserted from the tread surface of the assembly toward the inside of the tire to confirm the dropping of the pressure of the tire chamber to atmospheric pressure, and then the run-flat running is conducted on a circuit of a test course at a speed of 90 km/h to continuously measure the temperature of the particles in the tire chamber and the pressure of the tire chamber, whereby the state of developing the function of restoring internal pressure is examined.

Moreover, a pressure sensor monitoring the pressure of the tire chamber is assembled into the inner face of the rim in the tire-rim assembly to be evaluated, and signals of the measured pressure data are transmitted through a usually used telemeter to receive by a receiver disposed in an interior of a test vehicle. Thus, the running of 100 km at maximum is conducted while measuring the change of the pressure. As a result, a case that the pressure value of the tire chamber based on the development of the function restoring internal pressure under the run-flat running is higher than the above "internal pressure value of RF running limit" and the running of 100 km is attained is judged as acceptable.

These examined results are also shown in Tables 8-14.

[Table 8]

Content of tire to be evaluated and evaluation results

| | Invention Example 1 | Example 2 * | Invention Example 3 | Invention Example 4 | Invention Example 5 | Invention Example 6 | Invention Example 7 | Comparative Example 1 | Comparative Example 2 |
|---|---|---|---|---|---|---|---|---|---|
| **<Tire-rim assembly>** | | | | | | | | | |
| tire size | 235/35R19 | 235/35R19 | 235/35R19 | 235/35R19 | 235/35R19 | 235/35R19 | 235/35R19 | 235/35R19 | 235/35R19 |
| speed mark of tire | Y | Y | Y | Y | Y | Y | Y | Y | Y |
| rim size | 8JJ-19 | 8JJ-19 | 8JJ-19 | 8JJ-19 | 8JJ-19 | 8JJ-19 | 8JJ-19 | 8JJ-19 | 8JJ-19 |
| internal pressure value for RF running limit (kPa) | 35 | 35 | 35 | 35 | 35 | 35 | 35 | 35 | 35 |
| volume of tire chamber (cm$^3$) | 22750 | 22750 | 22750 | 22750 | 22750 | 22750 | 22750 | 22750 | 22750 |
| **<Hollow fine particles>** | | | | | | | | | |
| kind | A1 | A2 | A3 | A4 | A5 | A6 | A7 | A8 | A9 |
| filling ratio (vol%) | 30 | 30 | 30 | 30 | 30 | 30 | 30 | 30 | 30 |
| pressure of hollow portion | | | | | | | | | |
| **<Drum test for high-speed heat generation>** | | | | | | | | | |
| ratio of keeping volume of hollow fine particles (%) | 96.7 | 96.5 | 97.0 | 97.1 | 97.0 | 96.8 | 96.6 | 94.6 | 89.7 |
| maximum speed defined by speed mark of tire (km/h) | 300 | 300 | 300 | 300 | 300 | 300 | 300 | 300 | 300 |
| speed at stop of running (km/h) | 310 | 310 | 310 | 310 | 310 | 310 | 310 | 310 | 310 |
| judgement | acceptable | acceptable | acceptable | acceptable | acceptable | acceptable | acceptable | inacceptable | inacceptatble |
| **<Long-run drum test>** | | | | | | | | | |

(continued)

| Content of tire to be evaluated and evaluation results | Invention Example 1 | Example 2 * | Invention Example 3 | Invention Example 4 | Invention Example 5 | Invention Example 6 | Invention Example 7 | Comparative Example 1 | Comparative Example 2 |
|---|---|---|---|---|---|---|---|---|---|
| ratio of keeping volume of hollow fine particles (%) | 91 | 88 | 99 | 100 | 100 | 93 | 89 | 73 | 50 |
| judgment | acceptable | acceptable | acceptable | acceptable | acceptable | acceptable | acceptable | inacceptable | inacceptable |
| <Run-flat running test> | | | | | | | | | |
| pressure value of tire chamber (kPa) | 46 | 44 | 50 | 50 | 51 | 47 | 45 | 32 | 20 |
| running distance (km) | 100 | 100 | 100 | 100 | 100 | 100 | 100 | 80 | 27 |
| judgment | acceptable | acceptable | acceptable | acceptable | acceptable | acceptable | acceptable | inacceptable | inacceptable |

* not according to invention

44

[Table 9]

| [Content of tire to be evaluated and evaluation results] | | | | | | | |
|---|---|---|---|---|---|---|---|
| | Invention Example 18 | Invention Example 8 | Invention Example 9 | Example 10 * | Invention Example 11 | Invention Example 12 | Invention Example 13 |
| <Tire-rim assembly> | | | | | | | |
| tire size | 235/35R19 | 235/35R19 | 235/35R19 | 235/35R19 | 235/35R19 | 235/35R19 | 235/35R19 |
| speed mark of tire | Y | Y | Y | Y | | Y | Y |
| rim size | 8JJ-19 | 8JJ-19 | 8JJ-19 | 8JJ-19 | 8JJ-19 | 8JJ-19 | 8JJ-19 |
| internal pressure value for RF running limit (kPa) | 35 | 35 | 35 | 35 | 35 | 35 | 35 |
| volume of tire chamber (cm$^3$) | 22750 | 22750 | 22750 | 22750 | 22750 | 22750 | 22750 |
| <Hollow Fine particles> | | | | | | | |
| kind | A10 | A11 | A12 | A13 | A14 | A15 | A16 |
| filling ratio (vol%) | 30 | 30 | 30 | 30 | 30 | 30 | 30 |
| pressure of hollow portion | | | | | | | |
| <Drum test for high-speed heat generation> | | | | | | | |
| ratio of keeping volume of hollow fine particles (%) | 96.9 | 96.6 | 96.4 | 97.0 | 97.1 | 97.0 | 96.7 |
| maximum speed defined by speed mark of tire (km/h) | 300 | 300 | 300 | 300 | 300 | 300 | 300 |
| speed at stop of running (km/h) | 310 | 310 | 310 | 310 | 310 | 310 | 310 |
| judgement | acceptable | acceptable | acceptable | acceptable | acceptable | acceptable | acceptable |
| <Long-run drum test> | | | | | | | |
| ratio of keeping volume of hollow fine particles (%) | 95 | 90 | 87 | 97 | 100 | 98 | 89 |
| judgement | acceptable | acceptable | acceptable | acceptable | acceptable | acceptable | acceptable |
| <Run-flat running test> | | | | | | | |
| pressure value of tire chamber (kPa) | 48 | 46 | 44 | 49 | 52 | 49 | 45 |
| running distance (km) | 100 | 100 | 100 | 100 | 100 | 100 | 100 |

EP 1 952 880 B1

EP 1 952 880 B1

(continued)

| [Content of tire to be evaluated and evaluation results] | | | | | | | |
|---|---|---|---|---|---|---|---|
| | Invention Example 18 | Invention Example 8 | Invention Example 9 | Example 10 * | Invention Example 11 | Invention Example 12 | Invention Example 13 |
| judgment | acceptable | acceptable | acceptable | acceptable | acceptable | acceptable | acceptable |
| * not according to the invention | | | | | | | |

[Table 10]

| Content of tire to be evaluated and evaluation results | | | | | |
|---|---|---|---|---|---|
| | Invention Example 14 | Invention Example 15 | Invention Example 16 | Invention Example 17 | Invention Example 18 |
| <Tire-rim assembly> | | | | | |
| tire size | 215/60R16 | 245/45R18 | 245/45R18 | 235/35R19 | 235/35R19 |
| speed mark of tire | H | W | W | Y | Y |
| rim size | 7JJ-16 | 7.5J-18 | 7.5J-18 | 8JJ-19 | 8JJ-19 |
| internal pressure value for RF running limit (kPa) | 45 | 35 | 35 | 35 | 35 |
| volume of tire chamber (cm$^3$) | 36350 | 34980 | 34980 | 22750 | 22750 |
| <Hollow fine particles> | | | | | |
| kind | A17 | A18 | A19 | A20 | A21 |
| filling ratio (vol%) | 45 | 30 | 30 | 40 | 40 |
| pressure of hollow portion | | | | | |
| <Drum test for high-speed heat generation> | | | | | |
| ratio of keeping volume of hollow fine particles (%) | 97.0 | 96.9 | 96.8 | 96.8 | 96.6 |
| maximum speed defined by speed mark of tire (km/h) | 210 | 270 | 270 | 300 | 300 |
| speed at stop of running (km/h) | 210 | 270 | 280 | 310 | 310 |
| judgment | acceptable | acceptable | acceptable | acceptable | acceptable |
| <Long-run drum test> | | | | | |
| ratio of keeping volume of hollow fine particles (%) | 100 | 908 | 96 | 94 | 91 |
| judgment | acceptable | acceptable | acceptable | acceptable | acceptable |
| <Run-flat running test> <Run-flat running test> | | | | | |
| pressure value of tire chamber (kPa) | 72 | 48 | 48 | 68 | 64 |
| running distance (km) | 100 | 100 | 100 | 100 | 100 |
| judgement | acceptable | acceptable | acceptable | acceptable | acceptable |

[Table 11]

| Content of tire to be evaluated and evaluation results | | | | | | | |
|---|---|---|---|---|---|---|---|
| | Invention Example 19 * | Example 20 | Invention Example 21 | Invention Example 22 | Invention Example 23 | Example 24 * | Example 25 * |
| <Tire-rim assembly> | | | | | | | |
| tire size | 235/35R19 | 235/35R19 | 235/35R19 | 235/35R19 | 235/35R19 | 235/35R19 | 235/35R19 |
| speed mark of tire | Y | Y | Y | Y | Y | Y | Y |
| rim size | 8JJ-19 | 8JJ-19 | 8JJ-19 | 8JJ-19 | 8JJ-19 | 8JJ-19 | 8JJ-19 |
| internal pressure value for RF running limit (kPa) | 35 | 35 | 35 | 35 | 35 | 35 | 35 |
| volume of tire chamber (cm$^3$) | 22750 | 22750 | 22750 | 22750 | 22750 | 22750 | 22750 |
| <Hollow fine particles> | | | | | | | |
| kind | A22 | A23 | A24 | A25 | A26 | A27 | A28 |
| filling ratio (vol%) | 30 | 30 | 30 | 30 | 30 | 30 | 30 |
| pressure of hollow portion | | | | | | | |
| <Drum test for high-speed heat generation> | | | | | | | |
| ratio of keeping volume of hollow fine particles (%) | 95.8 | 96.7 | 97 | 96.6 | 96.1 | 96.2 | 96 |
| maximum speed defined by speed mark of tire (km/h) | 300 | 300 | 300 | 300 | 300 | 300 | 300 |
| speed at stop of running (km/h) | 310 | 310 | 310 | 310 | 310 | 310 | 310 |
| judgment | acceptable | acceptable | acceptable | acceptable | acceptable | acceptable | acceptable |
| <Long-run drum test> | | | | | | | |
| ratio of keeping volume of hollow fine particles (%) | 81 | 91 | 98 | 90 | 83 | 84 | 82 |
| judgement | acceptable | acceptable | acceptable | acceptable | acceptable | acceptable | acceptable |
| <Run-flat running test> | | | | | | | |
| pressure value of tire chamber (kPa) | 41 | 46 | 50 | 44 | 42 | 43 | 42 |

EP 1 952 880 B1

(continued)

| Content of tire to be evaluated and evaluation results | | | | | | | |
|---|---|---|---|---|---|---|---|
| | Invention Example 19 * | Example 20 | Invention Example 21 | Invention Example 22 | Invention Example 23 | Example 24 * | Example 25 * |
| running distance (km) | 100 | 100 | 100 | 100 | 100 | 100 | 100 |
| judgement | acceptable | acceptable | acceptable | acceptable | acceptable | acceptable | acceptable |
| * not according to the invention | | | | | | | |

[Table 12]

| Content of tire to be evaluated and evaluation results | | | | | |
|---|---|---|---|---|---|
| | Example 26 * | Invention Example 27 | Invention Example 28 | Invention Example 29 | Invention Example 30 |
| <Tire-rim assembly> | | | | | |
| tire size | 235/35R19 | 235/35R19 | 235/35R19 | 235/35R19 | 235/35R19 |
| speed mark of tire | Y | Y | Y | Y | Y |
| rim size | 8JJ-19 | 8JJ-19 | 8JJ-19 | 8JJ-19 | 8JJ-19 |
| internal pressure value for RF running limit (kPa) | 35 | 35 | 35 | 35 | 35 |
| volume of tire chamber (cm$^3$) | 22750 | 22750 | 22750 | 22750 | 22750 |
| <Hollow fine particles> | | | | | |
| kind | A29 | A30 | A31 | A32 | A33 |
| filling ratio (vol%) | 30 | 30 | 30 | 30 | 30 |
| pressure of hollow portion | | | | | |
| <Drum test for high-speed heat generation> | | | | | |
| ratio of keeping volume of hollow fine particles (%) | 96.4 | 97.1 | 97.1 | 96.8 | 96.0 |
| maximum speed defined by speed mark of tire (km/h) | 300 | 300 | 300 | 300 | 300 |
| speed at stop of running (km/h) | 310 | 310 | 310 | 310 | 310 |
| judgment | acceptable | acceptable | acceptable | acceptable | acceptable |
| <Long-run drum test> | | | | | |
| ratio of keeping volume of hollow fine particles (%) | 86 | 99 | 100 | 92 | 82 |
| judgment | acceptable | acceptable | acceptable | acceptable | acceptable |
| <Run-flat running test> | | | | | |
| pressure value of tire chamber (kPa) | 43 | 50 | 52 | 47 | 41 |
| running distance (km) | 100 | 100 | 100 | 100 | 100 |
| judgment | acceptable | acceptable | acceptable | acceptable | acceptable |
| * not according to the invention | | | | | |

[Table 13]

| Content of tire to be evaluated and evaluation results | | | |
|---|---|---|---|
| | Example 31 * | Example 32 * | Invention Example 33 |
| <Tire-rim assembly> | | | |

(continued)

| Content of tire to be evaluated and evaluation results | | | |
|---|---|---|---|
| | Example 31 * | Example 32 * | Invention Example 33 |
| tire size | 235/35R19 | 235/35R19 | 215/60R16 |
| speed mark of tire | Y | Y | Y |
| rim size | 8JJ-19 | 8JJ-19 | 7JJ-16 |
| internal pressure value for RF running limit (kPa) | 35 | 35 | 45 |
| volume of tire chamber (cm$^3$) | 22750 | 22750 | 36350 |
| <Hollow fine particles> | | | |
| kind | A34 | A35 | A36 |
| filling ratio (vol%) | 30 | 30 | 45 |
| pressure of hollow portion | | | |
| <Drum test for high-speed heat generation> | | | |
| ratio of keeping volume of hollow fine particles (%) | 96.6 | 95.9 | 96 |
| maximum speed defined by speed mark of tire (km/h) | 300 | 300 | 210 |
| speed at stop of running (km/h) | 310 | 300 | 210 |
| judgement | acceptable | acceptable | acceptable |
| <Long-run drum test> | | | |
| ratio of keeping volume of hollow fine particles (%) | 89 | 82 | |
| judgment | acceptable | acceptable | |
| <Run-flat running test> | | | |
| pressure value of tire chamber (kPa) 45 | | 41 | 66 |
| running distance (km) 100 | | 100 | 100 |
| judgement acceptable | | acceptable | acceptable |
| * not according to the invention | | | |

[Table 14]

| Content of tire to be evaluated and evaluation results | | | | | | | | |
|---|---|---|---|---|---|---|---|---|
| | Invention Example C1 | Invention Example C2 | Invention Example C3 | Invention Example C4 | Invention Example C5 | Invention Example C6 | Invention Example C7 | Invention Example C8 |
| <Tire-rim assembly> | | | | | | | | |
| tire size | 235/35R19 | 235/35R19 | 235/35R19 | 235/35R19 | 235/35R19 | 235/35R19 | 235/35R19 | 235/35R19 |
| speed mark of tire | Y | Y | Y | Y | Y | Y | Y | Y |
| rim size | 8JJ-19 | 8JJ-19 | 8JJ-19 | 8JJ-19 | 8JJ-19 | 8JJ-19 | 8JJ-19 | 8JJ-19 |
| internal pressure value for RF running limit (kPa) | 35 | 35 | 35 | 35 | 35 | 35 | 35 | 35 |
| volume of tire chamber (cm3) | 22750 | 22750 | 22750 | 22750 | 22750 | 22750 | 22750 | 22750 |
| <Hollow fine particles> | | | | | | | | |
| kind | C1 | C2 | C3 | C4 | C5 | C6 | C7 | C8 |
| filling ratio (vol%) | 30 | 30 | 30 | 30 | 30 | 30 | 30 | 30 |
| pressure of hollow portion | | | | | | | | |
| <Drum test for high-speed heat generation> | | | | | | | | |
| ratio of keeping volume of hollow fine particles (%) | 97.6 | 98.2 | 98.1 | 98.1 | 100 | 98.6 | 100 | 100 |
| maximum speed defined by speed mark of tire (km/h) | 300 | 300 | 300 | 300 | 300 | 300 | 300 | 300 |
| speed at stop of running (km/h) | 310 | 310 | 310 | 310 | 310 | 310 | 310 | 310 |
| judgment | acceptable | acceptable | acceptable | acceptable | acceptable | acceptable | acceptable | acceptable |
| <Long-run drum test> | | | | | | | | |

EP 1 952 880 B1

(continued)

| Content of tire to be evaluated and evaluation results | | | | | | | | |
|---|---|---|---|---|---|---|---|---|
| | Invention Example C1 | Invention Example C2 | Invention Example C3 | Invention Example C4 | Invention Example C5 | Invention Example C6 | Invention Example C7 | Invention Example C8 |
| ratio of keeping volume of hollow fine particles (%) | 97 | 94 | 96 | 98 | 100 | 98 | 100 | 100 |
| judgment | acceptable | acceptable | acceptable | acceptable | acceptable | acceptable | acceptable | acceptable |
| <Run-flat running test> | | | | | | | | |
| pressure value of tire chamber (kPa) | 49 | 47 | 48 | 50 | 50 | 51 | 52 | 50 |
| running distance (km) | 100 | 100 | 100 | 100 | 100 | 100 | 100 | 100 |
| judgment | acceptable | acceptable | acceptable | acceptable | acceptable | acceptable | acceptable | acceptable |

**Claims**

1. Heat-expandable microspheres consisting of an outer shell made of a thermoplastic resin obtained by polymerizing a monomer component in the presence of a polymerization initiator, and a foaming agent encapsulated in the outer shell and having a boiling point not higher than a softening point of the thermoplastic resin, wherein
the monomer component comprises a nitrile monomer and carboxyl group-containing monomer as an essential component; and the foaming agent comprises a fluorine-containing compound having an ether structure and a carbon number of 2-10 and containing no chlorine atom and bromine atom, and
a compression recovering ratio is not less than 82% after hollow fine particles obtained by heat-expanding the heat-expandable microspheres are subjected to a treatment of increasing an internal pressure according to the method as described in paragraphs [0048] and [0049] of the description.

2. Heat-expandable microspheres according to claim 1, wherein the nitrile monomer is not less than 30 mass% but not more than 75 mass% of the monomer component and the carboxyl group-containing monomer is not less than 25 mass% but not more than 70 mass% of the monomer component.

3. Heat-expandable microspheres according to claim 1 or 2, which have an average particle size of not less than 5 $\mu$m but not more than 50 $\mu$m, a coefficient of variation in particle size distribution CV of not more than 30% and an expansion starting temperature of not lower than 120°C but not higher than 210°C.

4. Heat-expandable microspheres according to any one of claims 1-3, wherein the outer shell has particles of a metal soap and/or carbon black at its outer peripheral face.

5. A method for producing heat-expandable microspheres by steps of dispersing an oily mixture of a monomer component, a foaming agent and a polymerization initiator into an aqueous dispersion medium and polymerizing the monomer component included in the oily mixture, wherein
as the foaming agent is used a foaming agent comprising a fluorine-containing compound having an ether structure and a carbon number of 2-10 and containing no chlorine atom and bromine atom, and
as the polymerization initiator is used a polymerization initiator comprising a peroxydicarbonate as an essential component,
wherein the monomer component comprises a nitrile monomer and a carboxyl group-containing monomer as an essential component and the peroxydicarbonate is at least one selected from bis(4-t-butylcyclohexyl) peroxydicarbonate, di-2-ethoxyethyl peroxydicarbonate and di-sec-butyl peroxydicarbonate, and
a compression recovering ratio is not less than 82% after hollow fine particles obtained by heat-expanding the heat-expandable microspheres are subjected to a treatment of increasing an internal pressure according to the method as described in paragraphs [0048] and [0049] of the description.

6. A method for producing heat-expandable microspheres according to claim 5, wherein an amount of the polymerization initiator is not less than 0.2 part by mass but not more than 8.0 parts by mass per 100 parts by mass of the monomer component.

7. A method for producing heat-expandable microspheres according to claim 5, wherein the nitrile monomer is not less than 30 mass% but not more than 75 mass% of the monomer component and the carboxyl group-containing monomer is not less than 25 mass% but not more than 70 mass% of the monomer component.

8. A method for producing heat-expandable microspheres according to any one of claims 5-7, which further comprises a step of attaching a metal soap and/or carbon black to outer peripheral faces of the heat-expandable microspheres.

**Patentansprüche**

1. Thermisch expandierbare Mikrosphären bestehend aus einem äußeren Mantel, der aus einem thermoplastischen Harz hergestellt ist, das durch Polymerisieren einer Monomerkomponente in Gegenwart eines Polymerisationsinitiators erhalten wird, und einem Schäumungsmittel, das in dem äußeren Mantel eingekapselt ist und einen Siedepunkt von nicht höher als dem Erweichungspunkt des thermoplastischen Harzes aufweist, wobei
die Monomerkomponente ein Nitrilmonomer und ein Carboxylgruppen enthaltendes Monomer als wesentliche Komponente umfasst; und das Schäumungsmittel eine fluorhaltige Verbindung umfasst, die eine Etherstruktur und eine Kohlenstoffzahl von 2 - 10 aufweist und kein Chloratom und Bromatom enthält, und

ein Verdichtungsrückverformungsverhältnis nicht weniger als 82 % beträgt, nachdem hohle Feinteilchen, die durch thermisches Expandieren der thermisch expandierbaren Mikrosphären erhalten worden sind, einer Behandlung des Erhöhens eines Innendrucks dem in den Abschnitten [0048] und [0049] der Beschreibung beschriebenen Verfahren entsprechend unterworfen worden sind.

2. Thermisch expandierbare Mikrosphären nach Anspruch 1, wobei das Nitrilmonomer nicht weniger als 30 Masse-%, jedoch nicht mehr als 75 Masse-% der Monomerkomponente beträgt und das Carboxylgruppen enthaltende Monomer nicht weniger als 25 Masse-%, jedoch nicht mehr als 70 Masse-% der Monomerkomponente beträgt.

3. Thermisch expandierbare Mikrosphären nach Anspruch 1 oder 2, die eine durchschnittliche Teilchengröße von nicht weniger als 5 $\mu$m, jedoch nicht mehr als 50 $\mu$m, einen Variationskoeffizienten der Teilchengrößenverteilung VK von nicht mehr als 30 % und eine Expansionsausgangstemperatur von nicht weniger als 120 °C, jedoch nicht höher als 210 °C aufweisen.

4. Thermisch expandierbare Mikrosphären nach einem der Ansprüche 1 - 3, wobei der äußere Mantel Teilchen einer Metallseife und/oder von Ruß an seiner äußeren peripheren Oberfläche aufweist.

5. Verfahren zur Herstellung von thermisch expandierbaren Mikrosphären durch Schritte des Dispergierens einer öligen Mischung einer Monomerkomponente, eines Schäumungsmittels und eines Polymerisationsinitiators in ein wässriges Dispersionsmittel und Polymerisierens der Monomerkomponente, die in die ölige Mischung integriert ist, wobei
als Schäumungsmittel ein Schäumungsmittel verwendet wird, das eine fluorhaltige Verbindung umfasst, die eine Etherstruktur und eine Kohlenstoffatomzahl von 2 - 10 aufweist und kein Chloratom und Bromatom enthält, und
als Polymerisationsinitiator ein Polymerisationsinitiator verwendet wird, der ein Peroxydicarbonat als wesentliche Komponente umfasst,
wobei die Monomerkomponente ein Nitrilmonomer und ein Carboxylgruppen enthaltendes Monomer als wesentliche Komponente umfasst und das Peroxydicarbonat mindestens eines ist ausgewählt von Bis(4-tert-butylcyclohexl)peroxydicarbonat, Di-2-ethoxyethylperoxydicarbonat und Di-sec-butylperoxydicarbonat ist und
ein Verdichtungsrückverformungsverhältnis nicht weniger als 82 % beträgt, nachdem hohle Feinteilchen, die durch thermisches Expandieren der thermisch expandierbaren Mikrosphären erhalten worden sind, einer Behandlung des Erhöhens eines Innendrucks dem in den Abschnitten [0048] und [0049] der Beschreibung beschriebenen Verfahren entsprechend unterworfen werden.

6. Verfahren zur Herstellung von thermisch expandierbaren Mikrosphären nach Anspruch 5, wobei eine Menge des Polymerisationsinitiators nicht weniger als 0,2 Masseteile, jedoch nicht mehr als 8,0 Masseteile pro 100 Masseteile der Monomerkomponente beträgt.

7. Verfahren zur Herstellung von thermisch expandierbaren Mikrosphären nach Anspruch 5, wobei das Nitrilmonomer nicht weniger als 30 Masse-%, jedoch nicht mehr als 75 Masse-s% der Monomerkomponente beträgt und das Carboxylgruppen enthaltende Monomer nicht weniger als 25 Masse-%, jedoch nicht mehr als 70 Masse-% der Monomerkomponente beträgt.

8. Verfahren zur Herstellung von thermisch expandierbaren Mikrosphären nach einem der Ansprüche 5 - 7, das ferner einen Schritt des Anbringens einer Metallseife und/oder von Ruß an die äußere periphere Oberfläche der thermisch expandierbaren Mikrosphären umfasst.

## Revendications

1. Microsphères thermiquement expansibles constituées d'une enveloppe externe fabriquée à partir d'une résine thermoplastique obtenue par la polymérisation d'un composant monomère en présence d'un initiateur de polymérisation, et d'un agent d'expansion encapsulé dans l'enveloppe externe et présentant un point d'ébullition non supérieur à un point de ramollissement de la résine thermoplastique, dans lesquelles
le composant monomère comprend un monomère de nitrile et un monomère contenant un groupe carboxyle comme composant essentiel; et l'agent d'expansion comprend un composé contenant du fluor ayant une structure éther et un indice d'atome de carbone de 2 à 10 et ne contenant pas d'atome de chlore et ni d'atome de brome, et
un rapport de récupération après compression non inférieur à 82 % après que les particules fines creuses obtenues par expansion thermique des microsphères thermiquement expansibles soient soumises à un traitement d'accroissement d'une pression interne selon le procédé tel que décrit aux paragraphes [0048] et [0049] de la description.

2. Microsphères thermiquement expansibles selon la revendication 1, dans lesquelles le monomère de nitrile n'est pas inférieur à 30 % en masse mais non supérieur à 75 % en masse du composant monomère et le monomère contenant un groupe carboxyle n'est pas inférieur à 25 % en masse mais non supérieur à 70 % en masse du composant monomère.

3. Microsphères thermiquement expansibles selon la revendication 1 ou 2, qui présentent une taille moyenne de particule non inférieure à 5 $\mu$m mais non supérieure à 50 $\mu$m, un coefficient de variation CV dans la distribution de tailles des particules non supérieur à 30 % et une température de départ de l'expansion non inférieure à 120°C mais non supérieure à 210°C.

4. Microsphères thermiquement expansibles selon l'une quelconque des revendications 1 à 3, dans lesquelles l'enveloppe externe présente des particules d'un savon métallique et/ou de noir de carbone au niveau de sa face périphérique externe.

5. Procédé de production de microsphères thermiquement expansibles par les étapes de dispersion d'un mélange huileux d'un composant monomère, d'un agent d'expansion et d'un initiateur de polymérisation dans un milieu de dispersion aqueux et la polymérisation du composant monomère inclus dans le mélange huileux, dans lequel comme agent d'expansion est utilisé un agent d'expansion comprenant un composé contenant du fluor ayant une structure éther et un indice d'atome de carbone de 2 à 10 et ne contenant ni atome de chlore ni atome de brome, et comme initiateur de polymérisation est utilisé un initiateur de polymérisation comprenant un peroxydicarbonate comme composant essentiel,
dans lequel le composant monomère comprend un monomère de nitrile et un monomère contenant un groupe carboxyle comme composant essentiel et le peroxydicarbonate est au moins l'un sélectionné parmi le peroxydicarbonate de bis(4-*t*-butylcyclohexyle), le peroxydicarbonate de di-2-éthoxyéthyle et le peroxydicarbonate de di-*sec*-butyle, et
un rapport de récupération après compression n'est pas inférieur à 82 % après que les particules fines creuses obtenues par expansion thermique des microsphères thermiquement expansibles soient soumises à un traitement d'accroissement d'une pression interne selon le procédé tel que décrit aux paragraphes [0048] et [0049] de la description.

6. Procédé de production de microsphères thermiquement expansibles selon la revendication 5, dans lequel une quantité d'initiateur de polymérisation n'est pas inférieure à 0,2 partie en masse mais non supérieure à 8,0 parties en masse pour 100 parties en masse du composant monomère.

7. Procédé de production de microsphères thermiquement expansibles selon la revendication 5, dans lequel le monomère de nitrile n'est pas inférieur à 30 % en masse mais non supérieur à 75 % en masse du composant monomère et le monomère contenant un groupe carboxyle n'est pas inférieur à 25 % en masse mais non supérieur à 70 % en masse du composant monomère.

8. Procédé de production de microsphères thermiquement expansibles selon l'une quelconque des revendications 5 à 7, qui comprend en outre une étape de fixation d'un savon métallique et/ou de noir de carbone aux faces périphériques externes des microsphères thermiquement expansibles.

# FIG. 1

# FIG. 2

# FIG. 3

**REFERENCES CITED IN THE DESCRIPTION**

**Patent documents cited in the description**

- US 3615972 A
- WO 200501694 A
- WO 2005049698 A
- EP 1508604 A
- US 2005008151 A
- JP 2000191817 A
- JP 2004000959 A